# EUROPEAN PATENT APPLICATION

(11) **EP 4 503 722 A1**
(43) Date of publication of application: **05.02.2025**
(21) Application number: 23773916.4
(22) Date of filing: 22.03.2023
(51) Int. Cl.: H04W 28/02

(54) **DATA PROCESSING METHOD, APPARATUS, COMMUNICATION DEVICE AND READABLE STORAGE MEDIUM**

(30) Priority: 24.03.2022 CN 202210303805
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Conti, Marco
(86) International application number: PCT/CN2023/083083
(87) International publication number: WO 2023/179669

(57) **Abstract**

This application discloses a data processing method and apparatus, a communication device, and a readable storage medium, and belongs to the technical field of communications. The data processing method in an embodiment of this application includes: executing, by a first communication device, a first operation, where the executing the first operation includes at least one of the following: measuring a network resource load; sending first information, where the first information includes at least one of the following: first category information and second category information; determining an importance level of a target data packet, data flow description information corresponding to the target data packet, and/or a tunnel to which the target data packet is mapped; determining a range of a first target data packet; stopping a first target operation and/or executing a second target operation, or, executing the first target operation; and executing a data transfer guaranteeing operation.

## Description

### CROSS-REFERENCE TO RELATED APPLICATIONS

This application claims the priority of Chinese Patent Application No. 202210303805.8 filed in China on Thursday, March 24, 2022, the entire content of which is hereby incorporated by reference.

### TECHNICAL FIELD

This application belongs to the technical field of communications, and particularly relates to a data processing method and apparatus, a communication device, and a readable storage medium.

### BACKGROUND

In existing networks, in a case that a radio access network (RAN) is congested, a core network continuing to push terminal data to the RAN will pose a further processing pressure to the RAN, i.e., the RAN executing packet loss will also cause resource overhead of the RAN, and moreover, the RAN cannot understand the differences among business data, so that important data may be missing while secondary data may be retained. Therefore, to alleviate network congestion and avoid probable loss of important data is the problem needed to be solved by this application.

### SUMMARY

Embodiments of this application provide a data processing method and apparatus, which can solve the problem of network congestion and probable loss of important data.

In a first aspect, provided is a data processing method, including:
executing, by a first communication device, a first operation, where the executing the first operation includes at least one of the following:
measuring a network resource load;
sending first information, where the first information includes at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation, or, executing the first target operation; and
executing a data transfer guaranteeing operation;
where
the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet,
   where
   the second category information includes at least one of the following:
      a monitored network resource load or an index of a load value corresponding to the network resource load; and
      second indication information, where the second indication information is configured to indicate at least one of the following: congestion ends, the network resource load does not reach the reporting threshold, and data transfer is recovered;
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In a second aspect, provided is a data processing method, including:
executing, by a second communication device, a second operation, where the second operation includes at least one of the following:
acquiring first information, where the first information includes at least one of the following: first category information and second category information;
measuring a network resource load;
determining an importance level of a target data packet, data flow description information corresponding to the target data packet, and/or a tunnel to which the target data packet is mapped;
determining a range of a first target data packet;
applying the information of the first data packet with different priorities in a priority sequence to execute the a second first target operation;
stopping the second first target operation and/or executing a second second target operation, or, executing the second first target operation; and
executing a data transfer guaranteeing operation;
where
the first category information includes at least one of the following:
   the monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet;
   where
   the second category information includes at least one of the following:
      a monitored network resource load or an index of a load value corresponding to the network resource load; and
      second indication information, where the second indication information is configured to indicate at least one of the following: congestion ends, the network resource load does not reach the reporting threshold, and data transfer is recovered;
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In a third aspect, provided is a data processing method, including:
executing, by a third communication device, a third operation, where the third operation includes at least one of the following:
generating or updating a first policy;
sending the first policy;
the first policy includes at least one of the following: a policy for not transferring data packets, a policy prioritized for guaranteed transfer of the data packets, a policy for monitoring the network resource load, one or more information of the first data packet, one or more information of the third data packet, and tenth indication information;
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: the terminal, the QoS flow, the radio bearer, the data flow, and the data set;
the policy for not transferring data packets includes at least one of the following:
   fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
   one or more related information of the first data packet, and one or more related information of the third data packet,
   where
   the related information of the first data packet includes at least one of the following: the information of the first data packet, the index of the information of the first data packet, an effective condition of the related information of the first data packet, and an ineffective condition of the related information of the first data packet;
   the related information of the third data packet includes at least one of the following: the information of the third data packet, and the index of the information of the third data packet;
   where
   the information of the first data packet is configured to indicate the range of the first data packet;
   the information of the third data packet is configured to indicate the range of the third data packet;
   the second data packet is a data packet depending on the first data packet; and
   the fourth data packet is a data packet on which the third data packet depends.

In a fourth aspect, provided is a data processing method, including:
executing, by a fourth communication device, a fourth operation, where the fourth operation includes at least one of the following:
generating or updating at least one of the following: a rule for not transferring data packets, generation of the first monitoring configuration information, generation of the second monitoring configuration information, one or more related information of the first data packet, and one or more related information of the third data packet;
sending at least one of the following: the rule for not transferring data packets; the first monitoring configuration information; the second monitoring configuration information, the one or more related information of the first data packet, and the one or more related information of the third data packet;
where the first monitoring configuration information includes at least one of the following:
   third indication information, configured to indicate to execute at least one of the following monitoring operations: monitoring the network resource load, sending the first information to a second target side, and executing the first target operation according to the first configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   one or more reporting thresholds, where the reporting threshold represents that reporting is needed only in a case that the network resource load reaches the reporting threshold;
   a network resource load threshold to which a congestion status is mapped; and
   a reporting event, where the reporting event includes at least one of the following: the congestion starts, the congestion ends, and the measured network resource load reaches the reporting threshold;
   a measuring frequency of the network resource load; and
   a measuring time period of the network resource load,
   where the second monitoring configuration information includes at least one of the following:
      fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring the data packets;
      network resource load types required to be monitored include at least one of the following: a resource load of the first target side, a resource load of a second target side, a resource load of the transfer layer, a resource load of an RAN network element, and a resource load of a user plane network element; and
      a time period during which the twelfth operations are executed.

In a fifth aspect, provided is a data processing method, including:
executing, by a fifth communication device, a fifth operation, where the fifth operation includes at least one of the following:
sending the first request information, including at least one of the following: the data flow description information, the information of the terminal, ninth indication information, the one or more related information of the first data packet, the one or more related information of the third data packet, and network resource load request information,
where
the ninth indication information is configured to indicate: in a case that an eighth condition is met, allowing not to transfer a part of data packets of a second object, allowing not to transfer the first data packet and/or a second data packet, requiring to guarantee the third data packet and/or a fourth data packet preferentially, and allowing not to transfer the data packets other than the third data packet and/or the fourth data packet,
where the eighth condition includes at least one of the following: the network resource cannot satisfy the transmission requirement on all data of the second object, the network cannot guarantee the QoS of the second object, and the network is congested;
the second object includes at least one of the following: the terminal, the data flow, and the data set;
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the second data packet is a data packet depending on the first data packet;
the fourth data packet is a data packet on which the third data packet depends;
the network resource load request information includes at least one of the following:
   tenth indication information, configured to indicate network resource load types required to be monitored;
   network resource load types required to be monitored include at least one of the following: a resource load of the first target side, a resource load of a second target side, a resource load of the transfer layer, a resource load of an RAN network element, and a resource load of a user plane network element; and
   a measuring frequency of the network resource load; and
   a reporting threshold of the network resource load;
   a reporting event of the network resource load; and
   a reporting period of the network resource load.

In a sixth aspect, provided is a data processing apparatus, applied to a first communication device, including:
a first processing module, configured to execute a first operation, where the executing the first operation includes at least one of the following:
measuring a network resource load;
sending first information, where the first information includes at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation, or, executing the first target operation; and
executing a data transfer guaranteeing operation,
where
the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet,
   where
   the second category information includes at least one of the following:
      a monitored network resource load or an index of a load value corresponding to the network resource load; and
      second indication information, where the second indication information is configured to indicate at least one of the following: congestion ends, the network resource load does not reach the reporting threshold, and data transfer is recovered;
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In a seventh aspect, provided is a data processing apparatus, applied to a second communication device, including:
a second processing module, configured to execute a second operation, where the second operation includes at least one of the following:
acquiring first information, where the first information includes at least one of the following: first category information and second category information;
measuring a network resource load;
determining an importance level of a target data packet, data flow description information corresponding to the target data packet, and/or a tunnel to which the target data packet is mapped;
determining a range of a first target data packet;
applying the information of the first data packet with different priorities in a priority sequence to execute the a second first target operation;
stopping the second first target operation and/or executing a second second target operation, or, executing the second first target operation; and
executing a data transfer guaranteeing operation,
where
the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet,
   where
   the second category information includes at least one of the following:
      a monitored network resource load or an index of a load value corresponding to the network resource load; and
      second indication information, where the second indication information is configured to indicate at least one of the following: congestion ends, the network resource load does not reach the reporting threshold, and data transfer is recovered,
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In an eighth aspect, provided is a data processing apparatus, applied to a third communication device, including:
a third processing module, configured to execute a third operation, where the third operation includes at least one of the following:
generating or updating a first policy;
sending the first policy;
the first policy includes at least one of the following: a policy for not transferring data packets, a policy prioritized for guaranteed transfer of the data packets, a policy for monitoring the network resource load, one or more information of the first data packet, one or more information of the third data packets, and tenth indication information,
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: the terminal, the QoS flow, the radio bearer, the data flow, and the data set;
the policy for not transferring data packets includes at least one of the following:
   fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
   one or more related information of the first data packet, and one or more related information of the third data packet;
   where
   the related information of the first data packet includes at least one of the following: the information of the first data packet, the index of the information of the first data packet, an effective condition of the related information of the first data packet, and an ineffective condition of the related information of the first data packet;
   the related information of the third data packet includes at least one of the following: the information of the third data packet, and the index of the information of the third data packet,
   where
   the information of the first data packet is configured to indicate the range of the first data packet;
   the information of the third data packet is configured to indicate the range of the third data packet;
   the second data packet is a data packet depending on the first data packet; and
   the fourth data packet is a data packet on which the third data packet depends.

In a ninth aspect, provided is a data processing apparatus, applied to a fourth communication device, including:
a fourth processing module, configured to execute a fourth operation, where the fourth operation includes at least one of the following:
generating or updating at least one of the following: a rule for not transferring data packets, generation of the first monitoring configuration information, generation of the second monitoring configuration information, one or more related information of the first data packet, and one or more related information of the third data packet;
sending at least one of the following: the rule for not transferring data packets; the first monitoring configuration information; the second monitoring configuration information, one or more related information of the first data packet, and one or more related information of the third data packet,
where the first monitoring configuration information includes at least one of the following:
   third indication information, configured to indicate to execute at least one of the following monitoring operations: monitoring the network resource load, sending the first information to a second target side, and executing the first target operation according to the first configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   one or more reporting thresholds, where the reporting threshold represents that reporting is needed only in a case that the network resource load reaches the reporting threshold;
   a network resource load threshold to which a congestion status is mapped; and
   a reporting event, where the reporting event includes at least one of the following: the congestion starts, the congestion ends, and the measured network resource load reaches the reporting threshold;
   a measuring frequency of the network resource load; and
   a measuring time period of the network resource load,
   where the second monitoring configuration information includes at least one of the following:
      fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring the data packets;
      network resource load types required to be monitored include at least one of the following: a resource load of the first target side, a resource load of a second target side, a resource load of the transfer layer, a resource load of an RAN network element, and a resource load of a user plane network element; and
      a time period during which the twelfth operations are executed.

In a tenth aspect, provided is a data processing apparatus, applied to a fifth communication device, including:
a fifth processing module, configured to execute a fifth operation, where the fifth operation includes at least one of the following:
sending the first request information, including at least one of the following: the data flow description information, the information of the terminal, ninth indication information, the one or more related information of the first data packet, the one or more related information of the third data packet, and network resource load request information,
where
the ninth indication information is configured to indicate: in a case that an eighth condition is met, allowing not to transfer a part of data packets of a second object, allowing not to transfer the first data packet and/or a second data packet, requiring to guarantee the third data packet and/or a fourth data packet preferentially, and allowing not to transfer the data packets other than the third data packet and/or the fourth data packet,
where the eighth condition includes at least one of the following: the network resource cannot satisfy the transfer requirement on all data of the second object, the network cannot guarantee the QoS of the second object, and the network is congested;
the second object includes at least one of the following: the terminal, the data flow, and the data set;
related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the second data packet is a data packet depending on the first data packet; and
the fourth data packet is a data packet on which the third data packet depends;
the network resource load request information includes at least one of the following:
   tenth indication information, configured to indicate network resource load types required to be monitored;
   network resource load types required to be monitored include at least one of the following: a resource load of the first target side, a resource load of a second target side, a resource load of the transfer layer, a resource load of an RAN network element, and a resource load of a user plane network element; and
   a measuring frequency of the network resource load; and
   a reporting threshold of the network resource load;
   a reporting event of the network resource load; and
   a reporting period of the network resource load.

In an eleventh aspect, provided is a communication device, including a processor and a memory, the memory storing programs or instructions runnable in the processor, where when executed by the processor, the programs or instructions implement the steps of the method described in the first aspect, or the steps of the method described in the second aspect, or the steps of the method described in the third aspect, or the steps of the method described in the fourth aspect, or the steps of the method described in the fifth aspect.

In a twelfth aspect, provided is a communication device, including a processor and a communication interface, where the processor is configured to implement the steps of the method described in the first aspect, or the steps of the method described in the second aspect, or the steps of the method described in the third aspect, or the steps of the method described in the fourth aspect, or the steps of the method described in the fifth aspect.

In a thirteenth aspect, provided is a communication system, including: a first communication device, a second communication device, a third communication device, a fourth communication device, and a fifth communication device, where the first communication device is configured to implement the steps of the data processing method described in the first aspect, the second communication device is configured to implement the steps of the data processing method described in the second aspect, the third communication device is configured to implement the steps of the method described in the third aspect, the fourth communication device is configured to implement the steps of the data processing method described in the fourth aspect, and the fifth communication device is configured to implement the steps of the data processing method described in the fifth aspect.

In a fourteenth aspect, provided is a readable storage medium, having programs or instructions stored therein, where when executed by the processor, the programs or instructions implement the steps of the method described in the first aspect, or the steps of the method described in the second aspect, or the steps of the method described in the third aspect, or the steps of the method described in the fourth aspect, or the steps of the method described in the fifth aspect.

In a fifteenth aspect, provided is a chip, including a processor and a communication interface, where the communication interface is coupled to the processor, and the processor is configured to run programs or instructions to implement the steps of the method described in the first aspect, or the steps of the method described in the second aspect, or the steps of the method described in the third aspect, or the steps of the method described in the fourth aspect, or the steps of the method described in the fifth aspect.

In a sixteenth aspect, provided is a computer program/program product stored in a storage medium. The computer program/program product is executed by at least one processor to implement the steps of the method described in the first aspect, or the steps of the method described in the second aspect, or the steps of the method described in the third aspect, or the steps of the method described in the fourth aspect, or the steps of the method described in the fifth aspect.

In the embodiments of this application, in a case of network congestion, transfer of the data packets can be stopped according to the information of the data packets and the indication of the network element of the core network, a further processing pressure on the communication devices can be avoided, the resource overhead of the communication devices is reduced, the transfer resource is saved, and the network congestion is alleviated; the communication devices can understand differences of business data through the indication of the network element of the core network, reserve important data and abandon secondary data, and avoid missing of important data.

### BRIEF DESCRIPTION OF THE DRAWINGS

FIG. 1 is a block diagram of a wireless communication system which is applicable to this embodiment of this application;
FIG. 2 is a flowchart of a data processing method provided in an embodiment of this application;
FIG. 3 is a flowchart of another data processing method provided in an embodiment of this application;
FIG. 4 is a flowchart of yet another data processing method provided in an embodiment of this application;
FIG. 5 is a flowchart of another data processing method provided in an embodiment of this application;
FIG. 6 is a flowchart of another data processing method provided in an embodiment of this application;
FIG. 7 is a flowchart of a data processing method provided in a specific embodiment of this application;
FIG. 8 is a flowchart of a data processing method provided in another specific embodiment of this application;
FIG. 9 is a schematic structural diagram of a data processing method provided in an embodiment of this application;
FIG. 10 is a schematic structural diagram of another data processing method provided in an embodiment of this application;
FIG. 11 is a schematic structural diagram of yet another data processing method provided in an embodiment of this application;
FIG. 12 is a schematic structural diagram of another data processing method provided in an embodiment of this application;
FIG. 13 is a schematic structural diagram of another data processing method provided in an embodiment of this application; and
FIG. 14 is a schematic structural diagram of a communication device provided in an embodiment of this application.

### DETAILED DESCRIPTION

The technical solutions in embodiments of this application are clearly and completely described in the following with reference to the accompanying drawings in the embodiments of this application. Apparently, the described embodiments are merely some, rather than all of the embodiments of this application. All other embodiments obtained by persons skilled in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "and/or" in the description and claims represents at least one of connected objects, and the character "/" usually represents that previous and next associated objects form an "or" relationship.

It is worth noting that the technologies described in this embodiment of this application are not limited to the Long Term Evolution (LTE)/LTE-advanced (LTE-A) system, and may further be applied to various wireless communication systems such as Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), and other systems. The terms "system" and "network" in this embodiment of this application are usually interchangeably used, and the technologies described can be applied to the systems and radio technologies mentioned above, and can also be applied to other systems and radio technologies. For an exemplary purpose, a New Radio (NR) system is described in the following description, and the term NR is used in most description below. However, these technologies can also be applied to other applications besides the NR system, for example, a 6^{th} generation (6th Generation, 6G) communication system.

Data of a video flow in Extended Reality (XR) can be distinguished as an intra picture (I) frame, a predictive (P) frame, and a bi-directional interpolated prediction (B) frame. The I frame is also referred to as an independent decoding frame. The frame between the I frames is the P frame or the B frame. The I frame associated with the P frame or the B frame is the I frame closest to the P frame or the B frame along a timeline. Since it cannot be decoded in absence of the I frame, the I frame can be independently decrypted in a case of absence of a non-I frame. The shown I frame is higher than the non-I frame in terms of importance. Requirements on Quality of Service (QoS) of the I frame and the non-I frame can be different. For example, the I frame is higher than the non-I frame in terms of priority. The sending rate of the non-I frame can be higher than that of the I frame. One frame can also be divided into a plurality of slices. One slice is also distinguished as I slice, P slice, and B slice, and the difference in importance is similar.

It is not difficult to understand that data in one business may have the difference in terms of importance.

In existing networks, in a case that the RAN is congested, the core network (for example, the user plane function (UPF)) continuing to push terminal data to the RAN will pose a further processing pressure to the RAN, i.e., the RAN executing packet loss will also cause resource overhead of the RAN, and moreover, the RAN cannot understand the differences among service data, so that important data may be missing while secondary data may be retained. Therefore, to alleviate the congestion of the RAN on the one hand and to guarantee the important service data on the other hand are problems needed to be solved in this application.

The UPF of an interface connected to the N6 can be referred to as an anchor gateway. One solving idea is that the anchor gateway continues to send important packets in a case that the RAN is congested without transferring (for example, abandoning or caching) secondary data packets till the RAN is no longer congested, and then sends the cached secondary data packets to the RAN. Therefore, the following detail problems still need to be solved:
(1) How the anchor gateway knows the RAN is congested.
(2) How the anchor gateway knows which data packets shall not be transferred (cached or abandoned). The importance level may only be effective in a mobile communication network, and the anchor gateway can execute abandoning of the data packets before the importance level is mapped to data. If the data cached at the anchor gateway is not sent, the anchor gateway can map the importance level of the data packets and determine that the data packets are not transferred according to the importance level. Therefore, there are two solving ideas: 1) identifying data flow description information of the target data needed not to be transferred; and 2) identify the importance level of the target data not transferred.
(3) In a case that the importance level of the data packet reaches or exceeds three levels (for example, A, B, and C, A>B>C in terms of importance), how to select the target data packet not transferred. For example, in a case of small congestion, the congestion may be alleviated if C type data packets are not transferred. In a case of high congestion, the congestion may be alleviated if B type and C type data packets are not transferred. In a case of extreme congestion, all data packets are not transferred. To distinguish the condition is also the problem to be solved by this application.
(4) In a case that the RAN is congested, how to inform it to the anchor gateway rapidly. There are many control plane interfaces between the RAN and the anchor gateway, which will bring a certain delay.
(5) There may be a certain time difference between the time when the RAN informs congestion and the time when the anchor gateway starts to lose packets. Within the time difference, part of secondary data packets has been sent to the RAN, the RAN may also need to take part in abandoning the part of data packets, but how the RAN knows the importance level of the data still needs to be solved.

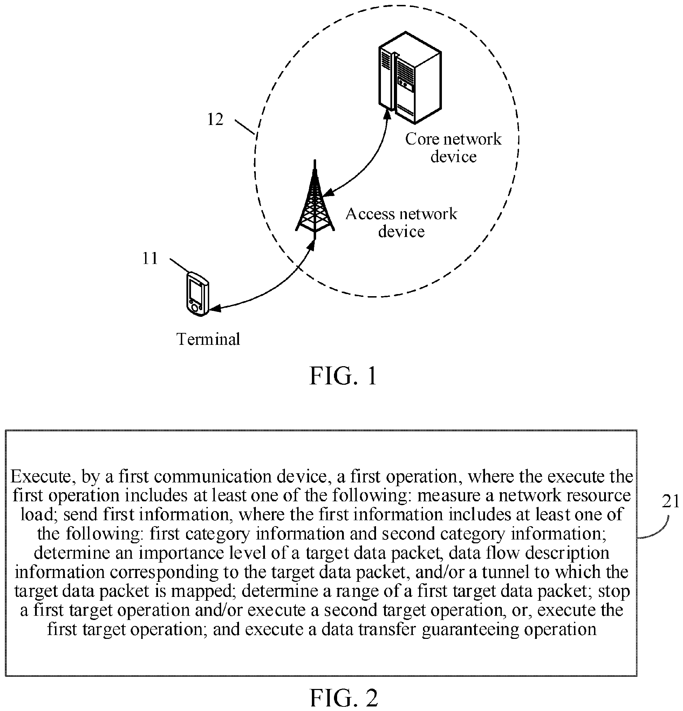

FIG. 1 is a block diagram of a wireless communication system to which an embodiment of this application can be applied. The wireless communication system includes a terminal 11 and a network side device 12. The terminal 11 may be terminal side devices such as a mobile phone, a tablet personal computer, a laptop computer or a notebook computer, a Personal Digital Assistant (PDA), a palmtop computer, a notebook, an Ultra-Mobile Person Computer (UMPC), a Mobile Internet Device (MID), an Augmented Reality (AR)/Virtual Reality (VR) device, a robot, a wearable device, Vehicle User Equipment (VUE), Pedestrian User Equipment (PUE), a smart home (a smart home with a wireless communication function, for example, a refrigerator, a television, a washer or furniture), a game machine, a Personal Computer (PC), a teller machine or a self-service machine, the wearable device including: a smart watch, a smart bracelet, a smart earphone, smart eyeglasses, smart jewelry (a smart bangle, a smart chain bracelet, a smart ring, a smart necklace, a smart anklet, a smart anklet chain and the like), a smart wristband, smart clothing, a game machine and the like. Finally, it should be noted that the specific type of the terminal 11 is not limited in this embodiment of this application. The network side device 12 may include an access network device or a core network device, where the access network device may also be referred to as a wireless access network device, a Radio Access Network (RAN), a wireless access network function or a wireless access network unit. The access network device may include a base station, a Wireless Local Area Network (WLAN) access point or a Wireless Fidelity (WiFi) node and the like. The base station may also be referred to as a node B, an evolution node B (eNB), an access point, a Base Transceiver Station (BTS), a radio base station, a radio transceiver, a Basic Service Set (BSS), an Extended Service Set (ESS), a household node B, a household evolution node B, a Transmitting Receiving Point (TRP) or some other appropriate terms in the field as long as the same technical effect is achieved. The base station is not limited to the appointed technical vocabularies. It should be noted that the base station in the NR system is taken as an example only in the embodiment of this application, but the specific type of the base station is not limited.

Optionally, acquisition may be understood as acquisition from configuration, reception, reception after the request passes, acquisition through self-leaning, acquisition by self-determination, self-generation, deductive acquisition according to information not received or acquisition after processing according to received information, and may be specifically determined according to an actual need, which is not defined in the embodiment of this application. For example, in a case that certain capability indication information sent by the device, it may be deduced that the device does not support the capability.

Optionally, sending may include broadcasting, broadcasting in a system message, and returning after responding to the request.

In an optional embodiment of this application, the communication device includes at least one of the following: a communication network element and a terminal.

In an embodiment of this application, the communication network element includes at least one of the following: a core network network element and an RAN network element.

In the embodiment of this application, the core network (CN) network element may include, but is not limited to, at least one of the following: A core network node, a core network function, a Mobility Management Entity (MME), an Access and Mobility Management Function (AMMF), a Session Management Function (SMF), a User Plane Function (UPF), a Policy Control Function (PCF), a Policy and Charging Rules Function (PCRF), an Edge Application Server Discovery Function (EASDF), Unified Data Management (UDM), Unified Data Repository (UDR), a Home Subscriber Server (HSS), a Centralized network configuration (CNC), a Network Repository Function (NRF), a Network Exposure Function (NEF), a Local NEF (or L-NEF), a Binding Support Function (BSF), an Application Function (AF) and the like.

In the embodiment of this application, the RAN network element may include, but is not limited to, at least one of the following: A radio access network device, a radio access network node, a radio access network function, a radio access network unit, a 3GPP radio access network, a non-3GPP radio access network, a Centralized Unit (CU), a Distributed Unit (DU), a base station, an evolved Node B (eNB), a 5G base station (gNB), a Radio Network Controller (RNC), a base station (NodeB), a Non-3GPP Inter Working Function (N3IWF), an Access Controller (AC) node, an Access Point (AP) device or a Wireless Local Area Networks (WLAN) node, and a N3IWF.

The base station may be a Base Transceiver Station (BTS) in the GSM or CDMA, or may be a base station (NodeB) in WCDMA, or may be an evolved NodeB (eNB or e-NodeB) in LTE and a 5G base station, which is not defined in this application.

In an optional embodiment of this application, the UE may include at least one of the following: a terminal device, a terminal device and a card, and a card.

In an optional embodiment of this application, the card may include at least one of the following: A Subscriber Identity Module (SIM) card, a Universal Subscriber Identity Module (USIM) card, an Embedded-SIM) (eSIM) card.

In an optional embodiment of this application, the terminal may include a relay supporting a terminal function and/or a terminal supporting a relay function. The terminal may also be referred to as a terminal device or User Equipment (UE), and the terminal may be a terminal side device such as a mobile phone, a Tablet Personal Computer, a Laptop Computer, a Personal Digital Assistant (PDA), a Mobile Internet Device (MID), a Wearable Device, or a vehicle-mounted device. It should be noted that the specific type of the terminal is not limited in this embodiment of this application.

In an optional embodiment of this application, the N3 is an interface between the RAN network element and the user plane network element. The N9 is an interface between the user plane network element and another user plane network element. The RAN network element and the anchor gateway (also a user plane network element) is directly connected through the N3 or also connected through other user plane network elements.

In an optional embodiment of this application, the information of the target data packet includes at least one of the following: an importance level, data flow description information (for example, a frame type or a slice type) of the target data packet, description information of a data collection of the target data packet, tunnel information mapped by the target data packet, a direction of the target data packet, and a source interface of the target data packet.

In an optional embodiment of this application, the data packet is a downlink data packet.

In an optional embodiment of this application, the importance level of the data packet is located in the description information of the data set.

In an optional embodiment of this application, not transferring the second data packet or abandoning transfer of the second data packet refers to not transferring the second data packet in a case that the first data packet is not transferred.

In an optional embodiment of this application, the user plane network element includes: a network element of the user plane of the core network (for example, the UPF, the anchor gateway).

In an optional embodiment of this application, monitoring, measuring, and monitoring the network resource load all are means to acquire the network resource load.

In an optional embodiment of this application, monitoring, measuring, and monitoring may represent same meaning.

In an optional embodiment of this application, conceptions of the resource load and the network resource load represent the same meaning and may be mixed in use. The network resource load or the resource load type may include at least one of the following: a resource load of the first target side (for example, the first communication device), a resource load of a second target side (for example, the second communication device), a resource load of the transfer layer, a resource load of RAN network element, and a resource load of a user plane network element.

In an optional embodiment of this application, the network resource load includes a network resource use condition, which may be reflected by a network resource use level. The network resource load level includes a network congestion level, which may be reflected by a network congestion level.

In an optional embodiment of this application, the resource load includes a resource use condition, which may be reflected by a resource use level. The resource load level includes a congestion level.

In an optional embodiment of this application, the actual resource load or the actual network resource load is the measured resource load;

In an optional embodiment of this application, the network resource load includes a network resource use condition, which may be reflected by a network resource use level. The network resource load level includes a network congestion level, which may be reflected by a network congestion level.

In an optional embodiment of this application, the not transferring or abandoning to transmit the data packets includes at least one of the following: locally caching, discarding, and deleting the data packets.

In an optional embodiment of this application, the importance level includes indication information configured to indicate an importance value or indication information configured to indicate the importance level. The importance level may be represented as an importance parameter.

In an embodiment, the importance level range may be reflected by one importance level. For example, the importance level X is configured to indicate all importance levels within the importance level range with the importance level lower than or equal to the X^{th} importance. For example, the importance level Y is configured to indicate all importance levels within the importance level range with the importance level higher than or equal to the Y^{th} importance.

In another embodiment, the importance level range is reflected by one or more importance levels.
1) In an embodiment, the first importance level is configured to indicate at least one of the following: the range of the first target data packet covers the data packets with the importance level lower than or equal to the first importance, and the range of the importance level covers all importance levels lower than or equal to the first importance.
2) In an embodiment, the second importance level is configured to indicate at least one of the following: the range of the first data packet covers the data packets with the importance level lower than or equal to the second importance, and the range of the importance level covers all importance levels lower than or equal to the second importance.
3) In an embodiment, the importance level range of the third data packet is reflected by the third importance level. The third importance level is configured to indicate at least one of the following: the range of the third data packet covers the data packets with the importance level higher than or equal to the third importance, and the range of the importance level covers all importance levels higher than or equal to the third importance.

In an optional embodiment of this application, the importance level includes a priority (for example, priority, Allocation/Retention Priority (ARP)).

In an optional embodiment of this application, the second configuration for not transferring data packets or a form of expression of the second configuration for not transferring data packets is a Forwarding Action Rule (FAR).

In an optional embodiment of this application, a header of the service application layer is, for example, a header of a L4S protocol.

In an optional embodiment of this application, the first target data packet is at least one of the following: the data packets with a low importance level, the data packets needed to be discarded, the data packets allowed not to be transferred, the data packets not required to be guaranteed to transmit preferentially, and the data packets depending on the data packets not required to be guaranteed to transmit preferentially.

In an optional embodiment of this application, the second target data packet is a data packet depending on the first target data packet.

In an optional embodiment of this application, the first data packet is at least one of the following: the data packets assigned by the information of the first data packet, the data packets needed to be discarded, and the data packets allowed to be discarded.

In an optional embodiment of this application, the second data packet is a data packet on which the third data packet depends.

In an optional embodiment of this application, the third data packet is a data packet that needs to be prioritized for guaranteed transfer.

In an optional embodiment of this application, the fourth data packet is a data packet on which the third data packet depends.

In an optional embodiment of this application, the information of the terminal is configured to identify the terminal, and includes at least one of the following: an identifier of the terminal, an IP address of the terminal, and a MAC address of the terminal.

In an optional embodiment of this application, the data flow description information is configured to identify that the data flow belongs to at least one of the following: a service, an application, a task, and the data flow.

In an embodiment of this application, the data flow includes a service data flow. The data flow may be referred to as a flow or a data flow.

In an optional embodiment of this application, the data flow description information includes at least one of the following: one or more description information of the data collection, the service type information, a Fully Qualified Domain Name (FQDN), an Internet Protocol (IP) address, a target IP address, a source port, a target side, a protocol number, a Media Access Control (MAC) address, a target MAC address, a service Application identity, an operating system (OS) identity, a packet detection rule (PDR), and a Data Network Name (DNN).

In an optional embodiment of this application, the data collection or the data set is the same meaning. The data collection may be data collection formed by part of data in the first object or the second object. One data collection includes one or more data. Generally, the importance of data in one data collection may be same. The importance of data in different data collections may be different.

In an optional embodiment of this application, the description information of the data collection includes at least one of the following: the importance level, description information of Group of Pictures (GOP), description information of the frame, description information of the slice, description information of the tile, description information of the FOV, and description information of the DoF.

In an embodiment, the description information of the frame includes at least one of the following: the frame type (for example, but not limited to, I frame, P frame, B frame and the like) of the frame, and the quantity of the data packets included in the frame.

In an embodiment, the description information of the slice includes at least one of the following: the slice type (for example, but not limited to, I slice, P slice, B slice and the like) of the slice, and the quantity of the data packets included in the slice.

In an embodiment, the description information of the tile includes at least one of the following: the tile type (for example, but not limited to, I tile, P tile, B tile and the like) of the tile, and the quantity of the data packets included in the tile.

In an embodiment, the description information of the GOP includes at least one of the following: the frame type included in the GOP, the order of appearance of the frame, and the quantity of the data packets included.

In an optional embodiment of this application, the data flow description information and/or the description information of the data collection may be reflected as packet filter information or data packet detection information.

In an optional embodiment of this application, the information of the tunnel or the tunnel information is configured to identify the tunnel, and includes at least one of the following: an identity (for example, a PDU session identity, an identity of a QoS stream, and an identity of the radio bearer) of the tunnel.

In an optional embodiment of this application, the tunnel may include at least one of the following: a PDU session, a Quality of Service (QoS) stream, an Evolved Packet System (EPS) bearing, a PDP context, a DRB, a SRB, and an Internet Protocol Security (IPsec) association.

In an embodiment of this application, the IPsec tunnel may include at least IPsec security associated SA. A first IPsec tunnel may also be referred to as one of the following: a signaling IPsec SA, an IPsec master SA, and an IPsec SA for transferring a control signaling; or other names, which is not specifically defined in this application. A data IPsec tunnel may also be referred to as one of the following: a data IPsec SA, an IPsec sub-SA, an IPsec SA for transferring user plane data, and IPsec SA for transferring the QoS flow data; or other names, which is not specifically defined in this application. In an embodiment of this application, the QoS information includes at least one of the following: a QoS level indication (for example, QCI or 5QI), a QoS rule, Qos flow description information, QoS context information, and QoS parameter information. The QoS flow description information may be QoS parameter information, and the QoS context information may include the QoS parameter information.

In an embodiment of this application, the data packet filtering information is included in the QoS rule.

In an embodiment of this application, the QoS parameter information may include at least one of the following: QoS level indication information, priority information, a packet delay budget, a packet error rate, maximum data burst, Guaranteed Bit Rate (GBR), a requirement with or without a default average window, the default average window, and the QoS parameter information related to GBR.

In an embodiment of this application, the tunnel is a GBR type, indicating that the QoS information of the tunnel includes the QoS parameter related to GBR.

In an embodiment of this application, the QoS parameter information related to GBR includes at least one of the following: an uplink and/or downlink guaranteed flow bit rate (GFBR), an uplink and/or downlink maximum flow bit rate (MFBR), an uplink and/or downlink GBR, and an uplink and/or downlink maximum bit rate (MBR).

In an embodiment of this application, the QoS information is required to be one of the following: QoS information and a QoS requirement; the QoS information may be one of the following: a QoS information requirement and the QoS requirement.

In an embodiment of this application, the QoS level indication may be referred to as 5QI, QoS Class Identifier (QCI), or other names, which is not defined in this application. The 5QI may serve as a QoS Flow Identity (QFI).

In an embodiment of this application, the packet filtering information may be configured to map the data into the tunnel of the network. The packet filtering information may also be referred to a Traffic Flow Template (TFT), an SDF, or other names, which is not specifically defined in this application.

In the embodiment of this application, the data packet filtering information, the packet filter information, and the packet filter may represent the same meaning, which may be mixed in use. The QoS parameter information and the QoS parameter may represent the same meaning, which may be mixed in use. The QoS level indication information and the QoS level indication may represent the same meaning, which may be mixed in use. The QoS flow description information and the QoS flow description may represent the same meaning, which may be mixed in use. The priority information, the QoS priority information, and the priority may represent the same meaning, which may be mixed in use.

In an embodiment of this application, the terminal and the tunnel of the second network may be abbreviated as a second network tunnel.

In an embodiment of this application, an emergency service may also be referred to as an emergency voice service.

In an embodiment of this application, the voice service may include an Interactive Multimedia Service (IMS) voice service. The IMS voice service may include at least one of the following: The IMS voice service through 3GPP and the IMS voice service through non-3 GPP.

In an embodiment of this application, the first network may be a public network, and the second network may be a non-public network; or, the first network may be a non-public network, and the second network may be a public network; or, the first network may be a first non-public network, and the second network may be a second non-public network; or, the first network may be a first public network, and the second network may be a second public network.

In an embodiment of this application, the non-public network is an abbreviation of the non-public network. The non-public network may be referred to as one of the following: a non-public communication network. The non-public network may include at least one of the following deployment modes: a physical non-public network, a virtual non-public network, and a non-public network implemented on the public network. In an embodiment, the non-public network is a Closed Access Group (CAG). One CAG may be formed by a group of terminals.

In an embodiment of this application, a non-public network service is an abbreviation of a non-public network service. The non-public network service may be referred to as one of the following: a network service of the non-public network service, a non-public communication service, a non-public network communication service, a network service of the non-public network or other names. Finally, it should be noted that the way of naming is not specifically defined in the embodiment of this application. In an embodiment, the non-public network is the CAG, and in this case, the non-public network service is the network service of the CAG.

In an embodiment of this application, the non-public network may include or may be referred to as a private network. The private network may be referred to as one of the following: a private communication network, a private network, a Local Area Network (LAN), a Private Virtual Network (PVN), an isolated communication network, a dedicated communication network or other names. Finally, it should be noted that the way of naming is not specifically defined in the embodiment of this application.

In an embodiment of this application, the non-public network service may include or may be referred to as a private network service. The private network service may be referred to as one of the following: a network service of the private network, a private communication service, a private network service, a private network service, a LAN service, a PVN service, an isolated tunnel network service, a dedicated tunnel network service, a dedicated network service or other names. Finally, it should be noted that the way of naming is not specifically defined in the embodiment of this application.

In an embodiment of this application, the public network is an abbreviation of the public network. The public network may be referred to as one of the following: a public communication network or other names. Finally, it should be noted that the way of naming is not specifically defined in the embodiment of this application.

In an embodiment of this application, a public network service is an abbreviation of a public network service. The public network service may be referred to as one of the following: a network service of the public network, a public communication service, a public network communication service, a network service of the public network or other names. Finally, it should be noted that the way of naming is not specifically defined in the embodiment of this application.

In an embodiment of this application, the NG interface may also be referred to as an S 1 interface or an N2 interface, which is not limited in terms of naming.

In an embodiment of this application, the communication network element includes at least one of the following: a core network network element and an RAN network element.

In an embodiment of this application, the network element (or referred to as a first network network element) of a first network includes at least one of the following: a core network network element of the first network and an RAN network element of the first network. The network element (or referred to as a second network network element) of the second network includes at least one of the following: a core network network element of the second network and an RAN network element of the second network.

In an embodiment of this application, the first network tunnel is the tunnel established between the terminal and the first network.

In an embodiment of this application, the second network tunnel is the tunnel established between the terminal and the second network.

In an embodiment of this application, a mapping relation between a Differentiated Services Code Point (DSCP) and the QoS information is a mapping relation between the DSCP and the QoS information in the second network.

In an embodiment of this application, the QoS information to which the DSCP is mapped is the QoS information obtained according to the mapping relation between the DSCP and the QoS information.

The data processing method provided in the embodiment of this application will be described in detail below in conjunction with drawings through some embodiments and application scenarios thereof.

Referring to FIG. 2, the embodiment of this application provides a data processing method, applied to a first communication device. The first communication device includes, but is not limited to, the RAN network element or the CN network element (for example, including, but not limited to, UPF (including, but not limited to, the anchor gateway, the intermediate UPF), AMF, PCF, UPF, DCCF, MFAF, and the like.). In a case that the first communication device is the CN network element, it may be referred to as a first CN network element. Specifically, the first communication device may be the UFP or the RAN. The method includes:
S21: A first communication device executes a first operation, where the executing the first operation includes at least one of the following:
measuring a network resource load;
sending first information, where the first information includes at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation, or, is executing the first target operation; and
executing a data transfer guaranteeing operation,
where
the first category information includes at least one of the following:
   the monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet,
   where
   the second category information includes at least one of the following:
      the monitored network resource load or an index of a load value corresponding to the network resource load; and
      second indication information, where the second indication information is configured to indicate at least one of the following: congestion ends, the network resource load does not reach the reporting threshold, and data transfer is recovered;
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In an embodiment of this application, the network resource load includes at least one of the following: a resource load of the first communication device, a resource load of a transfer layer connected to the first communication device, and a transmission rate of the transfer layer connected to the first communication device.

In an embodiment, the first communication device may send first information to the first target device, and the first target device includes, but is not limited to, at least one of the following: the second communication device, the third communication device, the fourth communication device, and the CN network element (for example, UPF, SMF, PCF, and the like).

In an embodiment, in a case that the first communication device is the RAN network element, the second communication device may be the UPF; in a case that the second communication device is the UPF, the second communication device may be the RAN network element;
The step of requiring to stop transferring the data packets to the first communication device includes: it is required to stop transferring all data packets to the first communication device.

The step of requiring to stop transferring all data packets to the first communication device includes at least one of the following:
it is required to stop transferring all data packets of the terminal to the first communication device;
it is required to stop transferring all data packets in an assigned tunnel of the terminal to the first communication device; and
it is required to stop transferring all data packets of an assigned type in the assigned tunnel of the terminal to the first communication device.

In an embodiment of this application, the step of executing, by the first communication device, the first operation includes:
the first communication device acquires first monitoring configuration information, one or more related information of the first data packet, one or more related information of the third data packet, and/or a first configuration for not transferring data packets; and
the first communication device executes the first operation according to the first monitoring configuration information, the one or more related information of the first data packet, the one or more related information of the third data packet, and/or a first configuration for not transferring data packets,
where
the first monitoring configuration information includes at least one of the following:
   third indication information, configured to indicate to execute at least one of the following monitoring operations: monitoring the network resource load, sending the first information to a second target side, and executing the first target operation according to the first configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   one or more reporting thresholds, where the reporting threshold represents that reporting is needed only in a case that the network resource load reaches the reporting threshold;
   a network resource load threshold to which a congestion status is mapped; and
   a reporting event, where the reporting event includes at least one of the following: the congestion starts, the congestion ends, and the measured network resource load reaches the reporting threshold;
   a measuring frequency of the network resource load; and
   a measuring time period of the network resource load.

In an implementation, the network resource load includes at least one of the following: a resource load of the communication device, a resource load of a transfer layer connected to the communication device, and a transmission rate of the transfer layer connected to the communication device.

In an embodiment, the second target side includes at least one of the following: the second communication device (for example, the RAN network element or the UPF), and the CN network element (for example, UPF, PCF, SMF, AF, and NEF).

In an embodiment, the threshold (the network resource load threshold) may be reflected by the resource load level. in a case that the network resource load reaches the level N, it refers to one of the following: the network source load is equal to or exceeds the resource load corresponding to the level N, but does not exceed the network resource load corresponding to the level N + 1; the network source load is equal to or exceeds the network resource load corresponding to the level N-1, but does not exceed the network resource load corresponding to the level N.

In an embodiment, the first communication device is pre-configured with the network resource load threshold to which the "congestion" is mapped.

It is not difficult to understand that the level N may represent a value interval corresponding to [N,N+1] or a value interval corresponding to [N-1,N].

In an embodiment, the first communication device may receive the first monitoring configuration information from a first source device, and the first source device includes, but is not limited to, the fourth communication device, a fourth CN network element (for example, the SMF) and the like.

In an embodiment of this application, the sending, by the first communication device, the first information includes: the first communication device sends an uplink data packet, where header information of the uplink data packet includes the first information;
and/or
the first communication device sends an uplink control plane signaling, where the uplink control plane signaling includes the first information.

In an embodiment of this application, the header information includes at least one of the following: a header of a GTP protocol and a header of a service application layer (for example, an L4S header).

In an embodiment of this application, the sending the first category information includes: in a case that a first condition is met, the first category information is sent,
where the first condition includes at least one of the following:
the congestion starts;
an actual resource load reaches the resource load corresponding to the first data packet; and
the actual resource load reaches the reporting threshold in the first monitoring configuration information.

In an embodiment of this application, the sending the second category information includes: in a case that a second condition is met, sending the second category information;
the second condition includes at least one of the following:
the congestion ends;
an actual resource load does not reach the resource load corresponding to the first data packet or is decreased to be less than the resource load corresponding to the first data packet; and
the actual resource load does not reach the reporting threshold in the first monitoring configuration information or is decreased to be less than the reporting threshold in the first monitoring configuration information.

In an embodiment of this application, the sending the monitored network resource load includes: in a case that a third condition is met, the monitored network resource load or the index of the load value corresponding to the network resource load is sent; and
the third condition includes at least one of the following:
the congestion starts or congestion ends;
the network resource load reaches the reporting threshold in the first monitoring configuration information;
a network resource load reporting event occurs; and
a network resource load period arrives.

In an embodiment of this application, the first target data packet is at least one of the following: a data packet with a low importance level, a packet that needs to be discarded, a packet that is allowed to be discarded, a packet that is not needed to be prioritized for guaranteed transfer, and a packet on which a packet that is not needed to be prioritized for guaranteed transfer depends.

In an embodiment of this application, the determining the range of the first target data packet includes at least one of the following:
the information of the first data packet with different priorities is applied step by step from the highest priority to the lowest priority to determine the range of the first target data packet; and
the importance level is used as the range of the first target data packet from the lowest importance level to the highest importance level;
The first target data packet includes at least one of the following: the first data packet, the second data packet, and the data packet with the lowest importance level;
the range of the first target data packet includes at least one of the following: the range of the first data packet, the range of the second data packet, and the range of the data packet with the lowest importance level;
the first target data packet does not include at least one of the following: the third data packet and the fourth data packet;
the range of the first target data packet does not include at least one of the following: the range of the third data packet and the range of the fourth data packet,
where
the second target data packet is a data packet depending on the first target data packet; and
the third data packet is a data packet that needs to be prioritized for guaranteed transfer; and
the fourth data packet is a data packet on which the third data packet depends.

In an embodiment of this application, the first target operation includes:
whether the target data packet is within the range of the first target data packet is determined;
whether the target data packet is the second target data packet is determined;
at least one of the following is executed for the target data packet that is within the range of the first target data packet and/or is the second target data packet: the target data packet is not transferred, a cache amount of the target data packet is excluded from a buffer status report, and the target data packet in a buffer area is deleted;
the first target data packet is not transferred;
in a case that the first target data packet is not transferred, the second target data packet is not transferred;
the first target data packet and/or the second target data packet in the buffer area are deleted;
importance level the information of the data packet is added for other data packets;
the other data packets are transferred;
all data packets are not transferred;
the information of the first data packet with different priorities is applied step by step from the highest priority to the lowest priority and not transferring the target data packet accord with the first data packet information; and
the target data packet is not transferred step by step from the lowest importance level to the highest importance level;
where
the second target data packet is a data packet depending on the first target data packet; and
the other data packets are data packets other than the first target data packet and/or the second target data packet.

In a case that the first communication device is the user plane network element, in an embodiment, the not transferring includes not transferring to at least one of the N9 interface and the RAN. For example, in a case of congestion of an opposite terminal (for example, the RAN network element) and/or congestion of a transfer network.

In another embodiment, the not transferring includes not transferring to at least one of the N9 interface, the RAN, and the N6. For example, in a case of congestion of the first communication device.

In a case that the first communication device is the RAN network element, in an embodiment, the not transferring includes not transferring to at least one of the N3 interface and the user plane network element (for example, the UPF). For example, in a case of congestion of an opposite terminal (for example, the user plane network element) and/or congestion of a transfer network. In another embodiment, the not transferring includes not transferring to at least one of the N3 interface, the user plane network element (for example, the UPF), and the terminal. For example, in a case that the first communication device is congested.

In an embodiment of this application, the second target operation includes:
importance level the information corresponding to the data packet is added for the data packets; and
the first communication device sends the data packet to a target side or a target interface;
the target side includes at least one of the following: the RAN, the user plane network element, and the terminal;
the target interface includes at least one of the following: the N9 interface, the N6 interface, the N3 interface, and the Uu interface.

In an embodiment, in a case that the first communication device is the user plane network element, the target side or the target interface includes at least one of the following: the N9 interface, the RAN, and the N6.

In an embodiment, in a case that the first communication device is the RAN network element, the target side or the target interface includes at least one of the following: the N3 interface, the user plane network element (for example, the UPF), and the terminal.

In an embodiment of this application, the executing, by the first communication device, the first target operation includes:
the first configuration for not transferring data packets, related information of the first data packet, and/or related information of the third data packet are acquired; and
the first communication device executes the first target operation according to the first category information, the first configuration for not transferring data packets, the related information of the first data packet, and/or the related information of the third data packet.

In an embodiment of this application, the first configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet;
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the effective condition of the related information of the first data packet includes at least one of the following: the congestion starts, the actual resource load reaches the resource load corresponding to the first data packet, the network resource cannot satisfy a transfer requirement of all data of a first object, and the network cannot guarantee QoS of the first object;
and/or
the effective condition of the related information of the third data packet includes at least one of the following: the congestion starts, the actual resource load reaches the resource load corresponding to the third data packet, the network resource cannot satisfy a transfer requirement of all data of the first object, and the network cannot guarantee QoS of the first obj ect;
   and/or
the ineffective condition of the related information of the first data packet includes at least one of the following: congestion ends, the actual resource load does not reach the resource load corresponding to the first data packet, the network resource satisfies the transfer requirement of all data of the first object, and the network can guarantee QoS of the first object;
   and/or
the ineffective condition of the related information of the third data packet includes at least one of the following: congestion ends, the actual resource load does not reach the resource load corresponding to the third data packet, the network resource can satisfy the transfer requirement of all data of the first object, and the network can guarantee QoS of the first object;
where the first object includes at least one of the following: a terminal, a QoS stream, a radio bearer, a data flow, and a data set.

In an embodiment of this application, the data transfer guaranteeing operation includes at least one of the following:
the data packets with high priority is transferred preferentially;
the data packets with high importance levels are transferred preferentially;
the third target data packet and/or the fourth target data packet are transferred preferentially;
the third target data packet and/or the fourth target data packet with high priority are transferred preferentially;
the third target data packet is a data packet that needs to be prioritized for guaranteed transfer; and
the fourth target data packet is the data packet on which the third target data packet depends.

In some embodiments, in a case that there are multiple third target data, the third data packet and/or the fourth data packet with high priority are transferred preferentially.

In an embodiment of this application, the executing, by the first communication device, the data transfer guaranteeing operation includes:
the related information of the third data packet is acquired;
the first communication device executes the data transfer guaranteeing operation according to the related information of the third data packet,
where
the related information of the third data packet includes at least one of the following: the information of the third data packet, the resource load corresponding to the third data packet, the priority corresponding to the third data packet, and the index of the information of the third data packet.

In this case, the third target data packet in the data transfer guaranteeing operation includes the third data packet;
The fourth target data packet in the data transfer guaranteeing operation includes the fourth data packet.

In an embodiment, the first communication device may receive the first monitoring configuration information from a second source device, and the second source device includes, but is not limited to, the fourth communication device, a fourth CN network element (for example, the SMF) and the like.

In an embodiment of this application, the executing the first operation includes: in a case that a fourth condition is met, executing the first operation according to the information of the first data packet, or determining that the information of the first data packet is effective;
the fourth condition includes at least one of the following:
the congestion starts;
the first category information is acquired;
an actual resource load reaches the resource load corresponding to the first data packet; and
the index information is acquired, and the index information is configured to indicate the information executing the first data packet corresponding to the index information.

In an embodiment of this application, the stopping executing the first target operation and/or executing the second target operation include at least one of the following: in a case that a fifth condition is met, executing the first operation according to the information of the first data packet;
the fifth condition includes at least one of the following:
the congestion ends;
the actual resource load does not reach the resource load corresponding to the first data packet;
the first category information is not acquired; and
the second category information is acquired.

In an embodiment of this application, the range of the first target data packet is indicated and reflected through the information of the first target data packet; the information of the first target data packet includes at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
   and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment, the importance level range of the first target data packet is reflected by the first importance level. The first importance level is configured to indicate at least one of the following: the range of the first target data packet covers the data packets with the importance level lower than or equal to the first importance, and the range of the importance level covers all importance levels lower than or equal to the first importance.

In another embodiment, the importance level range of the first target data packet is reflected by one or more importance levels.

In an embodiment, the importance level range of the first data packet is reflected by the second importance level. The second importance level is configured to indicate at least one of the following: the range of the first data packet covers the data packets with the importance level lower than or equal to the second importance, and the range of the importance level covers all importance levels lower than or equal to the second importance.

In another embodiment, the importance level range of the first data packet is reflected by one or more importance levels.

In an embodiment, the importance level range of the third data packet is reflected by the third importance level. The third importance level is configured to indicate at least one of the following: the range of the third data packet covers the data packets with the importance level higher than or equal to the third importance, and the range of the importance level covers all importance levels higher than or equal to the third importance.

In another embodiment, the importance level range of the third data packet is reflected by one or more importance levels.

In an embodiment of this application, the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
   and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
   and/or
the target priority corresponding to the first target data packet is a transfer discard priority, and is configured to indicate to execute the first target operation according to the information of the first target data packets with different priorities in a priority sequence;
   and/or
the target priority corresponding to the first data packet is a discard priority, and is configured to indicate to execute the first target operation according to the information of the first data packet with different priorities in a priority sequence;
   and/or
the priority corresponding to the third data packet is a transfer guaranteeing priority, and is configured to indicate to execute the data transfer guaranteeing operation according to the information of the third data packets with different priorities in a priority sequence;
   and/or
the index of the information of the first target data packet is configured to index the information of the first target data packet;
   and/or
the index of the information of the first data packet is configured to indicate the information of the first data packet;
   and/or
the index of the information of the third data packet is configured to indicate the information of the third data packet.

By means of the embodiments of this application, in a case of network congestion, transfer of the data packets can be stopped according to the information of the data packets and the indication of the network element of the core network, a further processing pressure on the communication devices can be avoided, the resource overhead of the communication devices is reduced, the transfer resource is saved, and the network congestion is alleviated; the communication devices can understand differences of business data through the indication of the network element of the core network, reserve important data and abandon secondary data, and avoid missing of important data.

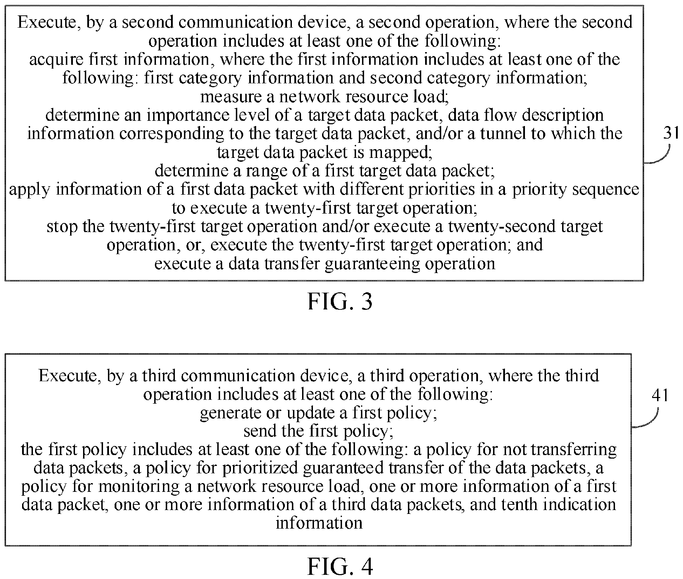

Referring to FIG. 3, the embodiment of this application provides a data processing method, applied to a second communication device. The second communication device includes, but is not limited to, the RAN network element or the CN network element (for example, including, but not limited to, UPF (including, but not limited to, the anchor gateway, the intermediate UPF), AMF, PCF, DCCF, MFAF, and the like). In a case that the first communication device is the CN network element, it may be referred to as a second CN network element. The method includes:
S31: the second communication device executes a second operation, where the second operation includes at least one of the following:
first information is acquired, where the first information includes at least one of the following: first category information and second category information;
a network resource load is measured;
an importance level of a target data packet, data flow description information corresponding to the target data packet, and/or a tunnel to which the target data packet is mapped are determined;
a range of a first target data packet is determined;
the information of the first data packet with different priorities is applied in a priority sequence to execute the a second first target operation;
the second first target operation is stopped and/or a second second target operation is executed, or, the second first target operation is executed; and
a data transfer guaranteeing operation is executed,
where
the first category information includes at least one of the following:
the monitored network resource load or an index of a load value corresponding to the network resource load; and
first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet;
where
the second category information includes at least one of the following:
   the monitored network resource load or an index of a load value corresponding to the network resource load; and
   second indication information, where the second indication information is configured to indicate at least one of the following: congestion ends, the network resource load does not reach the reporting threshold, and data transfer is recovered;
   where the second data packet is a data packet depending on the first data packet;
   the fourth data packet is a data packet on which the third data packet depends;
   the information of the first data packet is configured to indicate the range of the first data packet; and
   the information of the third data packet is configured to indicate the range of the third data packet.

In an embodiment, the second communication device may receive the first information from a third source device, and the third source device includes, but is not limited to, the first communication device RAN.

In an embodiment of this application, the network resource load includes at least one of the following: a resource load of the first communication device, a resource load of a transfer layer connected to the first communication device, and a transmission rate of the transfer layer connected to the first communication device.

In an embodiment of this application, the first target data packet is at least one of the following: a data packet with a low importance level, a data packet that needs to be discarded, a data packet that is allowed to be discarded, a data packet that is not needed to be prioritized for guaranteed transfer, and a data packet on which a data packet that is not needed to be prioritized for guaranteed transfer depends.

In an embodiment of this application, the determining the range of the first target data packet includes at least one of the following:
the information of the first data packet with different priorities is applied step by step from the highest priority to the lowest priority to determine the range of the first target data packet; and
the importance level is used as the range of the first target data packet from the lowest importance level to the highest importance level;
The first target data packet includes at least one of the following: the first data packet, the second data packet, and the data packet with the lowest importance level;
the range of the first target data packet includes at least one of the following: the range of the first data packet, the range of the second data packet, and the range of the data packet with the lowest importance level;
the first target data packet does not include at least one of the following: the third data packet and the fourth data packet;
the range of the first target data packet does not include at least one of the following: the range of the third data packet and the range of the fourth data packet,
where
the second target data packet is a data packet depending on the first target data packet; and
the third data packet is a data packet that needs to be prioritized for guaranteed transfer; and
the fourth data packet is a data packet on which the third data packet depends.

In an embodiment of this application, the second first target operation includes:
whether the target data packet is within the range of the first target data packet is determined;
whether the target data packet is the second target data packet is determined;
at least one of the following is executed for the target data packet that is within the range of the first target data packet and/or is the second target data packet: the target data packet is not transferred, a cache amount of the target data packet is excluded from a buffer status report, and the target data packet in a buffer area is deleted;
the first target data packet is not transferred;
in a case that the first target data packet is not transferred, the second target data packet is not transferred;
the first target data packet and/or the second target data packet in the buffer area are deleted;
importance level the information of the data packet is added for other data packets;
the other data packets are transferred;
all data packets are not transferred;
the information of the first data packet with different priorities is applied step by step from the highest priority to the lowest priority and not transferring the target data packet accord with the first data packet information; and
the target data packet is not transferred step by step from the lowest importance level to the highest importance level,
where
the second target data packet is a data packet depending on the first target data packet; and
the other data packets are data packets other than the first target data packet and/or the second target data packet.

In a case that the first communication device is the user plane network element, in an embodiment, the not transferring includes not transferring to at least one of the N9 interface and the RAN. For example, in a case of congestion of an opposite terminal (for example, the RAN network element) and/or congestion of a transfer network. In another embodiment, the not transferring includes not transferring to at least one of the N9 interface, the RAN, and the N6. For example, in a case of congestion of the first communication device.

In a case that the first communication device is the RAN network element, in an embodiment, the not transferring includes not transferring to at least one of the N3 interface and the user plane network element (for example, the UPF). For example, in a case of congestion of an opposite terminal (for example, the user plane network element) and/or congestion of a transfer network. In another embodiment, the not transferring includes not transferring to at least one of the N3 interface, the user plane network element (for example, the UPF), and the terminal. For example, in a case of congestion of the first communication device.

In an embodiment of this application, the second second target operation includes:
importance level the information corresponding to the data packet is added for the data packets; and
the second communication device sends the data packets to the target interface or the target side;
where the target side includes at least one of the following: the RAN, the user plane network element, and the terminal;
the target interface includes at least one of the following: the N9 interface, the N6 interface, the N3 interface, and the Uu interface.

In an embodiment, in a case that the first communication device is the user plane network element, the target side or the target interface includes at least one of the following: the N9 interface, the RAN, and the N6.

In an embodiment, in a case that the first communication device is the RAN network element, the target side or the target interface includes at least one of the following: the N3 interface, the user plane network element (for example, the UPF), and the terminal.

In an embodiment of this application, the sending, by the second communication device, the first information includes:
the second communication device receives an uplink data packet of the first communication device, and acquires the first information from header information of the uplink data packet; and/or
the second communication device receives an uplink control plane signaling of the first communication device, and acquires the first information from the uplink control plane signaling.

In an embodiment of this application, the header information includes at least one of the following: a header of a GTP protocol and a header of a service application layer (for example, an L4S header).

In an embodiment of this application, the executing, by the second communication device, the second first target operation includes:
the second communication device acquires second monitoring configuration information, one or more related information of the first data packet, one or more related information of the third data packet, and/or a second configuration for not transferring data packets;
the second communication device executes the second operation according to the second monitoring configuration information, one or more related information of the first data packet, one or more related information of the third data packet, and/or the second configuration for not transferring data packets;
the second monitoring configuration information includes at least one of the following:
   fifth indication information, configured to indicate to execute at least one of the following twelfth operations: the network resource load is monitored, the first information (for example, the first information sent by the first target side by monitoring the uplink packet) is acquired, the load resource of the resource using load of the first target side and/or the resource load of the transfer layer is monitored, sending the data packets to the first target side is stopped according to the resource load of the first target side and/or the resource load of the transfer layer, sending the data packets to the first target side is stopped according to a requirement of the first target side, the second first target operation is executed according to the second configuration for not transferring data packets, and sending the data packets to the first target side is stopped according to the second configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   a time period during which the twelfth operations are executed.

In an embodiment, the network resource load includes at least one of the following: a resource load of the communication device, a resource load of a transfer layer connected to the communication device, and a transmission rate of the transfer layer connected to the communication device.

In an embodiment, the second communication device may receive the second monitoring configuration information from a third source device, and the third source device includes, but is not limited to, the fourth communication device, a fourth CN network element (for example, the SMF) and the like.

The first target side includes the first communication device (for example, the UFP or the RAN network element).

In an embodiment of this application, the executing, by the second communication device, the second first target operation includes:
the second communication device executes the second first target operation according to the first category information and/or the second configuration for not transferring data packets.

In an embodiment of this application, the second configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet;
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the second data packet is a data packet depending on the first data packet; and
the fourth data packet is a data packet on which the third data packet depends.

The effective condition of the related information of the first data packet, the ineffective condition of the related information of the first data packet, the effective condition of the related information of the third data packet, and the ineffective condition of the related information of the third data packet are described in the embodiment of the first communication device in FIG. 2, which are no longer repeatedly described here.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment, in a case that the information of the first data packet only includes the tunnel information corresponding to the first data packet, the information may represent all data packets (for example, cached uplink data packets) of the tunnel to be abandoned to transmit.

In an embodiment, the auxiliary information is sent through a signaling or cell of granularity of the tunnel, representing that the auxiliary information is only applied to the tunnel. For example, the first data is the first data in the tunnel, implicitly defining that the range of the first data is within the tunnel. For example, the fourth indication information indicates to not transmit all the data, which represents not transferring all the data of the tunnel. For example, in combination with the importance level X in the information of the first data packet, it may be reflected that the first data packet is the data packet with the importance level X in the tunnel.

The tunnel includes, but is not limited to, the QoS flow, the radio bearer, the PDU session, and the like.

In an embodiment, in a case that the information of the first data packet only includes the range of the importance level of the first data packet, all the data packet with the importance level may be abandoned to transmit.

In an embodiment of this application, the executing the second first operation includes: in a case that a sixth condition is met, executing the second first operation according to the information of the first data packet, or determining that the information of the first data packet is effective;
the sixth condition includes at least one of the following:
the congestion starts;
the first category information is acquired;
an actual resource load reaches the resource load corresponding to the first data packet; and
the index information is acquired, and the index information is configured to indicate the information executing the first data packet corresponding to the index information.

In some embodiments, the congestion starts, which is determined according to at least one of the following: The second communication device is congested, and the transfer layer connected to the second communication device is congested to acquire the first indication information.

In an embodiment of this application, the stopping executing the second first target operation and/or executing the second second target operation include: in a case that a seventh condition is met, executing the second operation according to the information of the first data packet, and/or determining that the information of the first data packet ineffective;
the seventh condition includes at least one of the following:
congestion ends;
the actual resource load does not reach the resource load corresponding to the first data packet;
the first category information is not acquired; and
the second category information is acquired.

In an embodiment of this application, the range of the first target data packet is indicated and reflected through the information of the first target data packet; the information of the first target data packet includes at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
   and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment, the importance level range of the first target data packet is reflected by the first importance level. The first importance level is configured to indicate at least one of the following: the range of the first target data packet covers the data packets with the importance level lower than or equal to the first importance, and the range of the importance level covers all importance levels lower than or equal to the first importance.

In another embodiment, the importance level range of the first target data packet is reflected by one or more importance levels.

In an embodiment, the importance level range of the first data packet is reflected by the second importance level. The second importance level is configured to indicate at least one of the following: the range of the first data packet covers the data packets with the importance level lower than or equal to the second importance, and the range of the importance level covers all importance levels lower than or equal to the second importance.

In another embodiment, the importance level range of the first data packet is reflected by one or more importance levels.

In an embodiment, the importance level range of the third data packet is reflected by the third importance level. The third importance level is configured to indicate at least one of the following: the range of the third data packet covers the data packets with the importance level higher than or equal to the third importance, and the range of the importance level covers all importance levels higher than or equal to the third importance.

In another embodiment, the importance level range of the third data packet is reflected by one or more importance levels.

In an embodiment of this application, the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
   and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
   and/or
the target priority corresponding to the first target data packet is a discard priority, and is configured to indicate to execute the first target operation according to the information of the first target data packet with different priorities in a priority sequence;
   and/or
the priority corresponding to the first data packet is a discard priority, and is configured to indicate to execute the first target operation according to the information of the first data packet with different priorities in a priority sequence;
   and/or
the priority corresponding to the third data packet is a transfer guaranteeing priority, and is configured to indicate to execute the data transfer guaranteeing operation according to the information of the third data packets with different priorities in a priority sequence;
   and/or
the index of the information of the first target data packet is configured to index the information of the first target data packet;
   and/or
the index of the information of the first data packet is configured to indicate the information of the first data packet;
   and/or
the index of the information of the third data packet is configured to indicate the information of the third data packet.

By means of the embodiments of this application, in a case of network congestion, transfer of the data packets can be stopped according to the information of the data packets and the indication of the network element of the core network, a further processing pressure on the communication devices can be avoided, the resource overhead of the communication devices is reduced, the transfer resource is saved, and the network congestion is alleviated; the communication devices can understand differences of business data through the indication of the network element of the core network, reserve important data and abandon secondary data, and avoid missing of important data.

Referring to FIG. 4, the embodiment of this application provides a data processing method, applied to a third communication device. The third communication device includes, but is not limited to, the CN network element (for example, including, but not limited to, PCF). In a case that the third communication device is the CN network element, it may be referred to as a third CN network element. The method includes:
S41: the third communication device executes a third operation, where the third operation includes at least one of the following:
generating or updating a first policy;
sending the first policy;
the first policy includes at least one of the following: a policy for not transferring data packets, a policy prioritized for guaranteed transfer of the data packets, a policy for monitoring the network resource load, one or more information of the first data packet, one or more information of the third data packets, and tenth indication information;
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: the terminal, the QoS flow, the radio bearer, the data flow, and the data set;
the policy for not transferring data packets includes at least one of the following:
   fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
   one or more related information of the first data packet, and one or more related information of the third data packet;
   where
   the related information of the first data packet includes at least one of the following: the information of the first data packet, the index of the information of the first data packet, an effective condition of the related information of the first data packet, and an ineffective condition of the related information of the first data packet;
   the related information of the third data packet includes at least one of the following: the information of the third data packet, and the index of the information of the third data packet;
   where
   the information of the first data packet is configured to indicate the range of the first data packet;
   the information of the third data packet is configured to indicate the range of the third data packet;
   the second data packet is a data packet depending on the first data packet; and
   the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment, the network resource load is configured to indicate to monitor at least one of the following: a resource load of the communication device, a resource load of a transfer layer connected to the communication device, and a resource load of an opposite communication device.

The related information of the first data packet and the related information of the third data packet are described in the embodiment of the first communication device in FIG. 2, which are no longer repeatedly described here.

In an embodiment of this application, the effective condition of the related information of the first data packet includes at least one of the following: the congestion starts, the actual resource load reaches the resource load corresponding to the first data packet, the network resource cannot satisfy a transfer requirement of all data of a first object, and the network cannot guarantee QoS of the first object;
and/or
the ineffective condition of the related information of the first data packet includes at least one of the following: congestion ends, the actual resource load does not reach the resource load corresponding to the first data packet, the network resource satisfies the transfer requirement of all data of the first object, and the network can guarantee QoS of the first object;
where the first object includes at least one of the following: the terminal, the QoS stream, the radio bearer, and the data flow.

In an embodiment of this application, the policy configured to monitor the network resource load includes at least one of the following:
seventh indication information, configured to indicate to execute at least one of the following thirteenth operations: monitoring the network resource load, reporting the first information, acquiring the first information, monitoring the load resource of the first target side and/or the resource load of the transfer layer, stopping sending the data packets to the first target side according to the resource load of the first target side and/or the resource load of the transfer layer, stopping sending the data packets to the first target side according to a requirement of the first target side, executing the first target operation and/or the second first target operation according to the policy for not transferring data packets, and stopping sending the data packets to the first target side according to the policy for not transferring data packets;
network resource load types required to be monitored include at least one of the following: a resource load of the first target side, a resource load of a second target side, a resource load of the transfer layer, a resource load of an RAN network element, and a resource load of a user plane network element; and
one or more reporting thresholds, wherein the reporting thresholds represent that reporting is needed in a case that the network resource load reaches the thresholds;
a network resource load threshold to which a congestion status is mapped; and
a reporting event, where the reporting event includes at least one of the following: the congestion starts, the congestion ends, and the measured network resource load reaches the reporting threshold;
a measuring frequency of the network resource load; and
a measuring time period of the network resource load; and
a time period during which the thirteenth operations are executed.

In an embodiment, the first target side and the second target side include one of the following: the RAN and the user plane network element. In a case that the first target side is the RAN network element, the second target side may be the user plane network element. In a case that the first target side is the user plane network element, the second target side may be the RAN network element.

In an embodiment, the third communication device may send the first policy to the second target device, and the second target device includes, but is not limited to, the fourth communication device, a fourth CN network element (for example, the SMF) and the like.

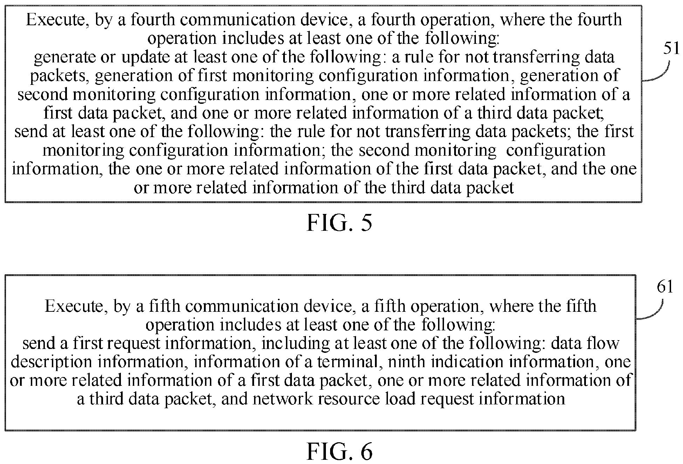

In an embodiment of this application, the executing, by the third communication device, the third operation includes: the third communication device acquires first request information; and
the third communication device executes the third operation according to the first request information;
where
the first request information includes at least one of the following: the data flow description information, the information of the terminal, eighth indication information, one or more related information of the first data packet, one or more related information of the third data packet, and network resource load request information.
the data flow description information, the information of the terminal, eighth indication information, one or more related information of the first data packet, one or more related information of the third data packet, and network resource load request information are specifically described in the fifth communication device in FIG. 6, which are no longer repeatedly described here.

In an embodiment of this application, the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment of this application, the executing, by the third communication device, the third operation includes:
acquiring, by the third communication device, the first category information; and
generating and/or sending, by the third communication device the policy for not transferring data packets according to the first category information;
where the first category information includes at least one of the following:
the monitored network resource load or an index of a load value corresponding to the network resource load; and
first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet.

In an embodiment, the first category information is acquired from the first target side.

In an embodiment of this application, after the generating the policy for monitoring the network resource load, the method further includes: the third communication device acquires the first category information.

In an embodiment, the third communication device may receive the first category information from a fourth source device, and the fourth source device includes, but is not limited to, the first communication device, for example, the RAN.

According to the embodiment of this application, the third communication device can generate the policy for not transferring data packets, the policy prioritized for guaranteed transfer of the data packets, and the policy for monitoring the network resource load according to the information of the data packets, can indicate to stop transmission of the data packets or indicate the data packets to be prioritized for guaranteed transfer, and can indicate other communication devices to execute corresponding operations (for example, stopping transmission of the data packets, abandoning secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

Referring to FIG. 5, the embodiment of this application provides a data processing method, applied to a fourth communication device. The fourth communication device includes, but is not limited to, the CN network element (for example, including, but not limited to, SMF and the like). In a case that the fourth communication device is the CN network element, it may be referred to as a fourth CN network element. The method includes:
S51: the fourth communication device executes a fourth operation, where the fourth operation includes at least one of the following:
generating or updating at least one of the following: a rule for not transferring data packets, generation of the first monitoring configuration information, generation of the second monitoring configuration information, one or more related information of the first data packet, and one or more related information of the third data packet;
sending at least one of the following: the rule for not transferring data packets; the first monitoring configuration information; the second monitoring configuration information, one or more related information of the first data packet, and one or more related information of the third data packet;
where the first monitoring configuration information includes at least one of the following:
   third indication information, configured to indicate to execute at least one of the following monitoring operations: the network resource load is monitored, the first information is sent to a second target side, and the first target operation is executed according to the first configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   one or more reporting thresholds, where the reporting threshold represents that reporting is needed only in a case that the network resource load reaches the reporting threshold;
   a network resource load threshold to which a congestion status is mapped; and
   a reporting event, where the reporting event includes at least one of the following: the congestion starts, the congestion ends, and the measured network resource load reaches the reporting threshold;
   a measuring frequency of the network resource load; and
   a measuring time period of the network resource load;
   where the second monitoring configuration information includes at least one of the following:
      fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring the data packets;
      network resource load types required to be monitored include at least one of the following: a resource load of the first target side, a resource load of a second target side, a resource load of the transfer layer, a resource load of an RAN network element, and a resource load of a user plane network element; and
      a time period during which the twelfth operations are executed.

In an embodiment, the network resource load includes at least one of the following: a resource load of the communication device, a resource load of a transfer layer connected to the communication device, and a transmission rate of the transfer layer connected to the communication device.

The related information of the first data packet and the related information of the third data packet are described in the embodiment of the first communication device in FIG. 2, which are no longer repeatedly described here.

In an embodiment of this application, the first configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet;
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the second configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet;
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the executing, by the fourth communication device, the fourth operation includes:
the fourth communication device acquires a first policy (self-configured or received);
the fourth communication device executes the fourth operation according to the first policy;
the first policy includes at least one of the following: a policy for not transferring data packets, a policy prioritized for guaranteed transfer of the data packets, a policy for monitoring the network resource load, one or more information of the first data packet, one or more information of the third data packets, and tenth indication information;
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: a terminal, a QoS stream, a radio bearer, a data flow, and a data set.
a policy for not transferring data packets, a policy prioritized for guaranteed transfer of the data packets, a policy for monitoring the network resource load, the information of the first data packet, and the information of the third data packets are described in the embodiment of the third communication device in FIG. 4, which are no longer repeatedly described here.

In an embodiment, the fourth communication device may receive the first policy from a fifth source device, and the fifth source device includes, but is not limited to, the third communication device, a third CN network element (for example, the PCF) and the like.

In an embodiment, the fourth communication device may receive the first monitoring configuration information from a third target device, and the third target device includes, but is not limited to, the second communication device, a second CN network element (for example, the UPF) and the like.

In an embodiment, the fourth communication device may receive the second monitoring configuration information from the third target device, and the third target device includes, but is not limited to, the second communication device, the second CN network element (for example, the UPF) and the like.

In an embodiment of this application, the executing, by the fourth communication device, the fourth operation includes:
the fourth communication device acquires the first category information; and
the fourth communication device generates and/or sends the second configuration for not transferring data packets according to the first category information;
where the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet.

In an embodiment of this application, after the sending the first monitoring configuration information and/or the second monitoring configuration information, the method further includes: the fourth communication device acquires the first category information.

In an embodiment, the fourth communication device may send the second monitoring configuration information to a fourth target device, and the fourth target device includes, but is not limited to, the first communication device, for example, the RAN and the like.

According to the embodiment of this application, the fourth communication device can generate the rule for not transferring data packets, the first monitoring configuration information, and the second monitoring configuration information according to the information of the data packets and the indication of the core network, can indicate to stop transmission of the data packets or indicate the data packets to be prioritized for guaranteed transfer, and can indicate other communication devices to execute corresponding operations (for example, stopping transmission of the data packets, abandoning secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

Referring to FIG. 6, the embodiment of this application provides a data processing method, applied to a fifth communication device. The fifth communication device includes, but is not limited to, the CN network element (for example, including, but not limited to, AF, NEF and the like). In a case that the fifth communication device is the CN network element, it may be referred to as a fifth CN network element. The method includes:
S61: the fifth communication device executes a fifth operation, where the fifth operation includes at least one of the following:
the first request information is sent, including at least one of the following: the data flow description information, the information of the terminal, ninth indication information, the one or more related information of the first data packet, the one or more related information of the third data packet, and network resource load request information;
where
the ninth indication information is configured to indicate: in a case that an eighth condition is met, allowing not to transfer a part of data packets of a second object, allowing not to transfer the first data packet and/or a second data packet, requiring to guarantee the third data packet and/or a fourth data packet preferentially, and allowing not to transfer the data packets other than the third data packet and/or the fourth data packet,
where the eighth condition includes at least one of the following: the network resource cannot satisfy the transmission requirement on all data of the second object, the network cannot guarantee the QoS of the second object, and the network is congested;
the second object includes at least one of the following: the terminal, the data flow, and the data set,
where the second object is configured to map the first object.

For example, the second object is the data flow, and the first object is the QoS flow or the radio bearer and the like.
related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the second data packet is a data packet depending on the first data packet; and
the fourth data packet is a data packet on which the third data packet depends;
In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.
the network resource load request information includes at least one of the following:
tenth indication information, configured to indicate network resource load types required to be monitored;
network resource load types required to be monitored include at least one of the following: a resource load of the first target side, a resource load of a second target side, a resource load of the transfer layer, a resource load of an RAN network element, and a resource load of a user plane network element;
a measuring frequency of the network resource load;
a reporting threshold of the network resource load;
a reporting event of the network resource load; and
a reporting period of the network resource load.

In an embodiment of this application, the effective condition of the related information of the first data packet includes at least one of the following: the congestion starts, the actual resource load reaches the resource load corresponding to the first data packet, the network resource cannot satisfy the transmission requirement on all the data of the second object, and the network cannot guarantee the QoS of the second object;
and/or
the effective condition of the related information of the third data packet includes at least one of the following: the congestion starts, the actual resource load reaches the resource load corresponding to the third data packet, the network resource cannot satisfy the transmission requirement on all the data of the second object, and the network cannot guarantee the QoS of the second object;
   and/or
the ineffective condition of the related information of the first data packet includes at least one of the following: congestion ends, the actual resource load does not reach the resource load corresponding to the first data packet, the network resource cannot satisfy the transmission requirement on all the data of the second object, and the network can guarantee the QoS of the second object;
   and/or
the ineffective condition of the related information of the third data packet includes at least one of the following: congestion ends, the actual resource load does not reach the resource load corresponding to the third data packet, the network resource cannot satisfy the transmission requirement on all the data of the second object, and the network can guarantee the QoS of the second object.

According to the embodiment of this application, the fifth communication device can send the first request information to the other communication device, so that the other communication devices generate the policy for not transferring data packets, the policy prioritized for guaranteed transfer of the data packets, and the policy for monitoring the network resource load and the like according to the first request information, so as to indicate to stop transmission of the data packets or indicate the data packets to be prioritized for guaranteed transfer, and can indicate other communication devices to execute corresponding operations (for example, stopping transmission of the data packets, abandoning secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

### Application scenario 1:

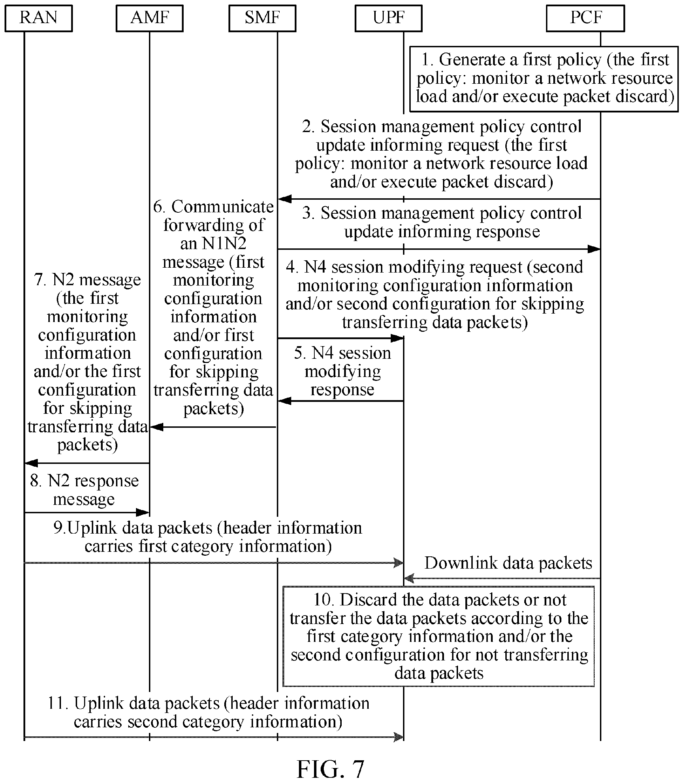

The application scenario 1 of the embodiment of this application mainly describes the following: the first communication is the RAN, the second communication device is the UPF, the third communication device is the PCF, the fourth communication device is the SMF, the third communication device sends the first policy to the second communication device, the user plane reports the network resource load, and the second communication device discards the data packets. Referring to FIG. 7, the method includes the following steps:
S 1: the PCF generates the first policy, where the first policy is configured to indicate to monitor the network resource load and/or execute packet discard (for example, it is required to execute the packet discarding operation according to the importance level of the data packets). For example, the first policy indicates to execute to abandon the data packets with the importance level X in a case that the first condition is met. The first condition may include: the network resource load reaches the level Y, and the current time is within a Z time period;
   the information included in the first policy is described in the embodiment in FIG. 4, which is no longer repeatedly described here;
S2: the PCF sends a session management policy control update informing request to the SMF, where the first policy is carried;
S3: the SMF returns a session management policy control update informing response to the PCF;
S4: the SMF generates the first monitoring configuration information and/or the second monitoring configuration information according to the first policy, where contents included in the first monitoring configuration information and the second monitoring configuration information are described in the embodiment in FIG. 4. In an embodiment, the first monitoring configuration information and the second monitoring configuration information may be configured to indicate to monitor the network resource load and/or execute packet discard (for example, it is required to execute the packet discarding operation according to the importance level of the data packets).

The SMF may further generate the first configuration for not transferring data packets and/or the second configuration for not transferring data packets, which is described specifically in the embodiment in FIG. 5.

The SMF sends the second monitoring configuration information and/or the second configuration for not transferring data packets to the UPF through an N4 session modifying request;
S5: the UPF returns the N4 session modifying response to the SMF;
S6: the SMF sends an N1N2 message to the AMF, where the N1N2 message carries the first monitoring configuration information and/or the first configuration for not transferring data packets;
S7: the AMF sends an N2 message to the RAN, where the N2 message carries the first monitoring configuration information and/or the first configuration for not transferring data packets;
S8: the RAN returns an N2 response message to the AMF;
S9: the RAN monitors the network resource load according to the first monitoring configuration information, and in a case that the first condition is met (for example, if start of the network congestion is monitored, the network resource load is A or the network resource use rate is greater than a preset threshold), the RAN carries the first category information in the control plane signalingsent to the UPF. The first category information is described in the embodiment in FIG. 2, which is no longer repeatedly described here. In an embodiment, the first category information may be configured to indicate the network resource load A or indicate that the network resource use rate is greater than the preset threshold or indicate to start abandoning the data packets.

In an embodiment, the RAN may abandon the received downlink data packets which are not sent to the terminal according to the first configuration for not transferring data packets.

S 10: the UPF receives the uplink data packets of the RAN. The UPF reads the first category information in the header information of the uplink data packets according to the second monitoring configuration information; in a case that the downlink data packets reach or the downlink data packets have not yet been sent, the UPF detects the information (for example, the importance level) of the down link data packets according to the first category information and/or the second configuration for not transferring data packets, abandons the data packets with the lowest importance level, or does not send the downlink data packets (for example, abandon the data packets with the importance level being X) to the N3 or N9 interface according to the second configuration for not transferring data packets;
For example, the second configuration for not transferring data packets includes the information of the first data packet. The information of the first data packet is the importance level X.

S 11: subsequently, the RAN monitors the network resource load, and carries the second category information in the header information when sending the uplink data packets to the UFP in a case that the second condition is met (for example, the network congestion ends, the network resource load is B, or the network resource use rate is not greater than the preset threshold). The second category information is described in the embodiment in FIG. 2, which is no longer repeatedly described here. In an embodiment, the second category information may be configured to indicate the network resource load B or indicate that the network resource use rate is not greater than the preset threshold or indicate to finish abandoning the data packets, and then the UPF may finish the abandoning operation of the data packets.

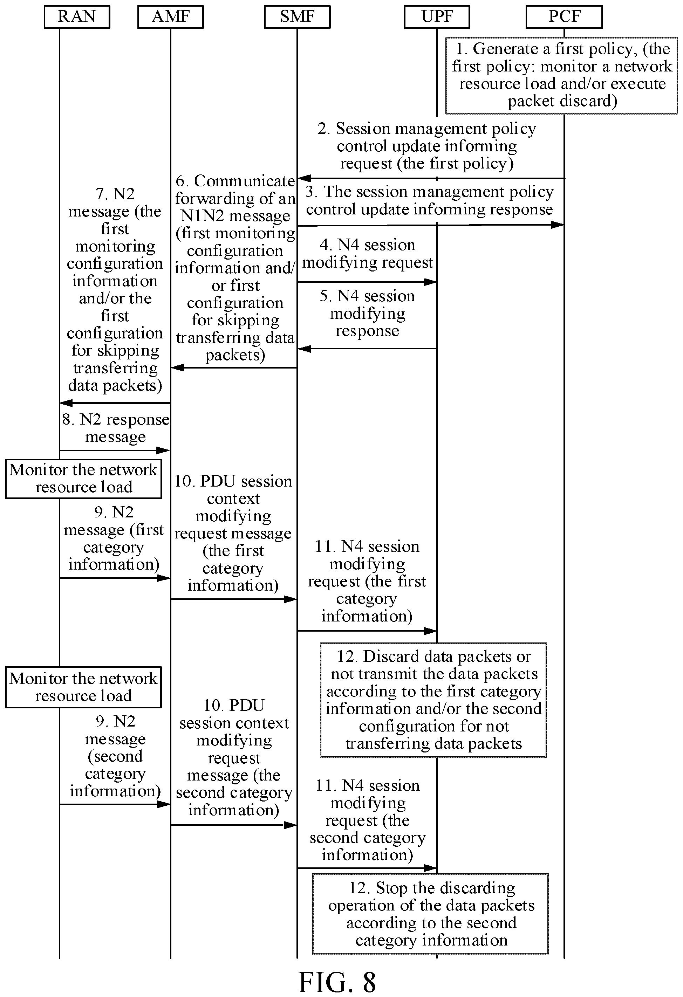

The application scenario 2 of the embodiment of this application mainly describes the following: the first communication is the RAN, the second communication device is the UPF, the third communication device is the PCF, the fourth communication device is the SMF, the third communication device sends the first policy to the second communication device, the control plane reports the network resource load, and the second communication device discards the data packets. Referring to FIG. 8, the method includes the following steps:
S 1: the PCF generates the first policy, where the first policy is configured to indicate to monitor the network resource load and/or execute packet discard (for example, it is required to execute the packet discarding operation according to the importance level of the data packets). For example, the first policy indicates to execute to abandon the data packets with the importance level X in a case that the first condition is met. The first condition may include: the network resource load reaches the level Y, and the current time is within a Z time period;
S2: the PCF sends a session management policy control update informing request to the SMF, where the first policy is carried;
S3: the SMF returns a session management policy control update informing response to the PCF;
S4: the SMF generates the first monitoring configuration information and/or the second monitoring configuration information according to the first policy, where contents included in the first monitoring configuration information and the second monitoring configuration information are described in the embodiment in FIG. 4. In an embodiment, the first monitoring configuration information and the second monitoring configuration information may be configured to indicate to monitor the network resource load and/or execute packet discard (for example, it is required to execute the packet discarding operation according to the importance level of the data packets).
   The SMF may further generate the first configuration for not transferring data packets and/or the second configuration for not transferring data packets, which is described specifically in the embodiment in FIG. 5.
S5: the UPF returns the N4 session modifying response to the SMF;
S6: the SMF sends an N1N2 message to the AMF, where the N1N2 message carries the first monitoring configuration information and/or the first configuration for not transferring data packets;
S7: the AMF sends an N2 message to the RAN, where the N2 message carries the first monitoring configuration information and/or the first configuration for not transferring data packets;
S8: the RAN returns an N2 response message to the AMF;
S9: the RAN monitors the network resource load according to the first monitoring configuration information, and in a case that the first condition is met (for example, if start of the network congestion is monitored, the network resource load is A or the network resource use rate is greater than a preset threshold), the RAN carries the first category information in the header information when sending the uplink data to the AMF. The first category information is described in the embodiment in FIG. 2, which is no longer repeatedly described here. In an embodiment, the first category information may be configured to indicate the network resource load A or indicate that the network resource use rate is greater than the preset threshold or indicate to start abandoning the data packets.
   In an embodiment, the RAN may abandon the received downlink data packets which are not sent to the terminal according to the first configuration for not transferring data packets.
S10: the AMF sends a PDU session context modifying request message to the SMF, where the DU session context modifying request message carries the first category information;
S11: the SMF sends an N4 session modifying request to the UPF, where the N4 session modifying carries the first category information;
S 12: in a case that the downlink data packets reach or the downlink data packets have not yet been sent, the UPF detects the information (for example, the importance level) of the down link data packets according to the first category information and/or the second configuration for not transferring data packets, abandons the data packets with the lowest importance level, or does not send the downlink data packets (for example, abandon the data packets with the importance level being X) to the N3 or N9 interface according to the second configuration for not transferring data packets;
For example, the second configuration for not transferring data packets includes the information of the first data packet. The information of the first data packet is the importance level X.

Or, referring to FIG. 8, after step S8, the method may further include the following steps:
S9: subsequently, the RAN monitors the network resource load, and carries the second category information in the control plane signaling sent tothe AMF in a case that the second condition is met (for example, the network congestion ends, the network resource load is B, or the network resource use rate is not greater than the preset threshold). The second category information is described in the embodiment in FIG. 2, which is no longer repeatedly described here. In an embodiment, the second category information may be configured to indicate the network resource load B or indicate that the network resource use rate is not greater than the preset threshold or indicate to finish abandoning the data packets, and then the UPF may finish the abandoning operation of the data packets.
S10: the AMF sends a PDU session context modifying request message to the SMF, where the DU session context modifying request message carries the second category information;
S 11: the SMF sends an N4 session modifying request to the UPF, where the N4 session modifying carries the second category information;
S12: the UPF stops the abandoning operation of the data packets according to the second category information, and optionally, the UPF further stops detecting the importance level of the downlink data packets.

An executing main body for the data processing method provided in the embodiment of this application may be a data processing apparatus. By taking a situation that the data processing apparatus executes the data processing method in the embodiment of this application, the data processing apparatus provided in the embodiment of this application is described.

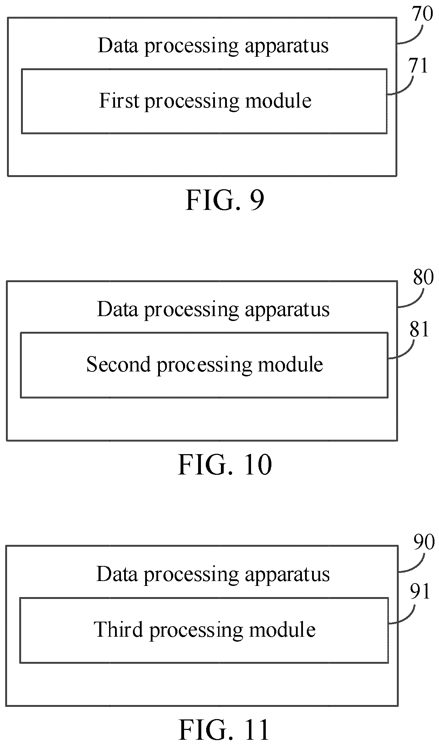

Referring to FIG. 9, FIG. 9 is a schematic structural diagram of a data processing apparatus provided in the embodiment of this application. The apparatus is applied to the first communication device. As shown in FIG. 9, the data processing apparatus 70 includes:
a first processing module 71, configured to execute a first operation, where the executing the first operation includes at least one of the following:
measuring a network resource load;
sending first information, where the first information includes at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation is executed, or, executing the first target operation; and
executing a data transfer guaranteeing operation,
where
the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet;
   where
   the second category information includes at least one of the following:
      the monitored network resource load or an index of a load value corresponding to the network resource load; and
      second indication information, where the second indication information is configured to indicate at least one of the following: congestion ends, the network resource load does not reach the reporting threshold, and data transfer is recovered,
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In an embodiment of this application, the network resource load includes at least one of the following: a resource load of the first communication device, a resource load of a transfer layer connected to the first communication device, and a transmission rate of the transfer layer connected to the first communication device.

In an embodiment, the first communication device may send first information to the first target device, and the first target device includes, but is not limited to, at least one of the following: the second communication device, the third communication device, the fourth communication device, and the CN network element (for example, UPF, SMF, PCF, and the like).

In an embodiment, in a case that the first communication device is the RAN network element, the second communication device may be the UPF; in a case that the second communication device is the UPF, the second communication device may be the RAN network element;
The step of requiring to stop transferring the data packets to the first communication device includes: it is required to stop transferring all data packets to the first communication device.

The step of requiring to stop transferring all data packets to the first communication device includes at least one of the following:
it is required to stop transferring all data packets of the terminal to the first communication device;
it is required to stop transferring all data packets in an assigned tunnel of the terminal to the first communication device; and
it is required to stop transferring all data packets of an assigned type in the assigned tunnel of the terminal to the first communication device.

In an embodiment of this application, the first processing module 71 is configured to acquire first monitoring configuration information, one or more related information of the first data packet, one or more related information of the third data packet, and/or a first configuration for not transferring data packets; and execute the first operation according to the first monitoring configuration information, one or more related information of the first data packet, one or more related information of the third data packet, and/or a first configuration for not transferring data packets;
where
the first monitoring configuration information includes at least one of the following:
third indication information, configured to indicate to execute at least one of the following monitoring operations: the network resource load is monitored, the first information is sent to a second target side, and the first target operation is executed according to the first configuration for not transferring data packets;
network resource load types required to be monitored include at least one of the following: a resource load of the first target side, a resource load of a second target side, a resource load of the transfer layer, a resource load of an RAN network element, and a resource load of a user plane network element; and
one or more reporting thresholds, where the reporting threshold represents that reporting is needed only in a case that the network resource load reaches the reporting threshold;
a network resource load threshold to which a congestion status is mapped; and
a reporting event, where the reporting event includes at least one of the following: the congestion starts, the congestion ends, and the measured network resource load reaches the reporting threshold;
a measuring frequency of the network resource load; and
a measuring time period of the network resource load.

In an embodiment, the network resource load includes at least one of the following: a resource load of the communication device, a resource load of a transfer layer connected to the communication device, and a transmission rate of the transfer layer connected to the communication device.

In an embodiment, the second target side includes at least one of the following: the second communication device (for example, the RAN network element or the UPF), and the CN network element (for example, UPF, PCF, SMF, AF, and NEF).

In an embodiment, the threshold (the network resource load threshold) may be reflected by the resource load level. in a case that the network resource load reaches the level N, it refers to one of the following: the network source load is equal to or exceeds the resource load corresponding to the level N, but does not exceed the network resource load corresponding to the level N+l; the network source load is equal to or exceeds the network resource load corresponding to the level N-1, but does not exceed the network resource load corresponding to the level N.

In an embodiment, the first communication device is pre-configured with the network resource load threshold to which the "congestion" is mapped.

It is not difficult to understand that the level N may represent a value interval corresponding to [N,N+1] or a value interval corresponding to [N-1,N].

In an embodiment, the first communication device may receive the first monitoring configuration information from a first source device, and the first source device includes, but is not limited to, the fourth communication device, a fourth CN network element (for example, the SMF) and the like.

In an embodiment of this application, the sending, by the first processing module 71, the first information includes: the first processing module 71 sends an uplink data packet, where header information of the uplink data packet includes the first information;
and/or
the first processing module 71 sends an uplink control plane signaling, where the uplink control plane signaling includes the first information.

In an embodiment of this application, the header information includes at least one of the following: a header of a GTP protocol and a header of a service application layer (for example, an L4S header).

In an embodiment of this application, the first processing module 71 is specifically configured to, in a case that the first condition is met, send the first category information,
where the first condition includes at least one of the following:
the congestion starts;
an actual resource load reaches the resource load corresponding to the first data packet; and
the actual resource load reaches the reporting threshold in the first monitoring configuration information.

In an embodiment of this application, the first processing module 71 is specifically configured to, in a case that the second condition is met, send the second category information;
the second condition includes at least one of the following:
congestion ends;
an actual resource load does not reach the resource load corresponding to the first data packet or is decreased to be less than the resource load corresponding to the first data packet; and
the actual resource load does not reach the reporting threshold in the first monitoring configuration information or is decreased to be less than the reporting threshold in the first monitoring configuration information.

In an embodiment of this application, the first processing module 71 is specifically configured to, in a case that the third condition is met, send the monitored network resource load or the index of the load value corresponding to the network resource load is sent; and
the third condition includes at least one of the following:
the congestion starts or congestion ends;
the network resource load reaches the reporting threshold in the first monitoring configuration information;
a network resource load reporting event occurs; and
a network resource load period arrives.

In an embodiment of this application, the first target data packet is at least one of the following: a data packet with a low importance level, a data packet that needs to be discarded, a data packet that is allowed to be discarded, a data packet that is not needed to be prioritized for guaranteed transfer, and a data packet on which a data packet that is not needed to be prioritized for guaranteed transfer depends.

In an embodiment of this application, the determining the range of the first target data packet includes at least one of the following:
the information of the first data packet with different priorities is applied step by step from the highest priority to the lowest priority to determine the range of the first target data packet; and
the importance level is used as the range of the first target data packet from the lowest importance level to the highest importance level;
The first target data packet includes at least one of the following: the first data packet, the second data packet, and the data packet with the lowest importance level;
the range of the first target data packet includes at least one of the following: the range of the first data packet, the range of the second data packet, and the range of the data packet with the lowest importance level;
the first target data packet does not include at least one of the following: the third data packet and the fourth data packet;
the range of the first target data packet does not include at least one of the following: the range of the third data packet and the range of the fourth data packet,
where
the second target data packet is a data packet depending on the first target data packet; and
the third data packet is a data packet that needs to be prioritized for guaranteed transfer; and
the fourth data packet is a data packet on which the third data packet depends.

In an embodiment of this application, the first target operation includes:
whether the target data packet is within the range of the first target data packet is determined;
whether the target data packet is the second target data packet is determined;
at least one of the following is executed for the target data packet that is within the range of the first target data packet and/or is the second target data packet: the target data packet is not transferred, a cache amount of the target data packet is excluded from a buffer status report, and the target data packet in a buffer area is deleted;
the first target data packet is not transferred;
in a case that the first target data packet is not transferred, the second target data packet is not transferred;
the first target data packet and/or the second target data packet in the buffer area are deleted;
importance level the information of the data packet is added for other data packets;
the other data packets are transferred;
all data packets are not transferred;
the information of the first data packet with different priorities is applied step by step from the highest priority to the lowest priority and not transferring the target data packet accord with the first data packet information; and
the target data packet is not transferred step by step from the lowest importance level to the highest importance level,
where
the second target data packet is a data packet depending on the first target data packet; and
the other data packets are data packets other than the first target data packet and/or the second target data packet.

In a case that the first communication device is the user plane network element, in an embodiment, the not transferring includes not transferring to at least one of the N9 interface and the RAN. For example, in a case of congestion of an opposite terminal (for example, the RAN network element) and/or congestion of a transfer network.

In another embodiment, the not transferring includes not transferring to at least one of the N9 interface, the RAN, and the N6. For example, in a case that the first communication device is congested.

In a case that the first communication device is the RAN network element, in an embodiment, the not transferring includes not transferring to at least one of the N3 interface and the user plane network element (for example, the UPF). For example, in a case of congestion of an opposite terminal (for example, the user plane network element) and/or congestion of a transfer network. In another embodiment, the not transferring includes not transferring to at least one of the N3 interface, the user plane network element (for example, the UPF), and the terminal. For example, in a case of congestion of the first communication device.

In an embodiment of this application, the second target operation includes:
importance level the information corresponding to the data packet is added for the data packets; and
the first communication device sends the data packet to a target side or a target interface;
the target side includes at least one of the following: the RAN, the user plane network element, and the terminal;
the target interface includes at least one of the following: the N9 interface, the N6 interface, the N3 interface, and the Uu interface.

In an embodiment, in a case that the first communication device is the user plane network element, the target side or the target interface includes at least one of the following: an N9 interface, an RAN, and an N6.

In an embodiment, in a case that the first communication device is the RAN network element, the target side or the target interface includes at least one of the following: the N3 interface, the user plane network element (for example, the UPF), and the terminal.

In an embodiment of this application, the first processing module 71 is specifically configured to acquire the first configuration for not transferring data packets, related information of the first data packet, and/or related information of the third data packet are acquired; and
execute the first target operation according to the first category information,the first configuration for not transferring data packets, the related information of the first data packet, and/or the related information of the third data packet.

In an embodiment of this application, the first configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the effective condition of the related information of the first data packet includes at least one of the following: the congestion starts, the actual resource load reaches the resource load corresponding to the first data packet, the network resource cannot satisfy a transfer requirement of all data of a first object, and the network cannot guarantee QoS of the first object;
and/or
the effective condition of the related information of the third data packet includes at least one of the following: the congestion starts, the actual resource load reaches the resource load corresponding to the third data packet, the network resource cannot satisfy a transfer requirement of all data of the first object, and the network cannot guarantee QoS of the first obj ect;
   and/or
the ineffective condition of the related information of the first data packet includes at least one of the following: congestion ends, the actual resource load does not reach the resource load corresponding to the first data packet, the network resource satisfies the transfer requirement of all data of the first object, and the network can guarantee QoS of the first object;
   and/or
the ineffective condition of the related information of the third data packet includes at least one of the following: congestion ends, the actual resource load does not reach the resource load corresponding to the third data packet, the network resource can satisfy the transfer requirement of all data of the first object, and the network can guarantee QoS of the first object,
where the first object includes at least one of the following: a terminal, a QoS stream, a radio bearer, a data flow, and a data set.

In an embodiment of this application, the data transfer guaranteeing operation includes at least one of the following:
the data packets with high priority is transferred preferentially;
the data packets with high importance levels are transferred preferentially;
the third target data packet and/or the fourth target data packet are transferred preferentially;
the third target data packet and/or the fourth target data packet with high priority are transferred preferentially;
the third target data packet is a data packet that needs to be prioritized for guaranteed transfer; and
the fourth target data packet is the data packet on which the third target data packet depends.

In some embodiments, in a case that there are multiple third target data, the third data packet and/or the fourth data packet with high priority are transferred preferentially.

In an embodiment of this application, the first processing module 71 is specifically configured to acquire the related information of the third data packet are acquired; and execute the data transfer guaranteeing operation according to the related information of the third data packet,
where
the related information of the third data packet includes at least one of the following: the information of the third data packet, the resource load corresponding to the third data packet, the priority corresponding to the third data packet, and the index of the information of the third data packet.

In this case, the third target data packet in the data transfer guaranteeing operation includes the third data packet;
the fourth target data packet in the data transfer guaranteeing operation includes the fourth data packet.

In an embodiment, the first communication device may receive the first monitoring configuration information from a second source device, and the second source device includes, but is not limited to, the fourth communication device, a fourth CN network element (for example, the SMF) and the like.

In an embodiment of this application, the first processing module 71 is specifically configured to, in a case that a fourth condition is met, execute the first operation according to the information of the first data packet, or determine that the information of the first data packet is effective;
the fourth condition includes at least one of the following:
the congestion starts;
the first category information is acquired;
an actual resource load reaches the resource load corresponding to the first data packet; and
the index information is acquired, and the index information is configured to indicate the information executing the first data packet corresponding to the index information.

In an embodiment of this application, the first processing module 71 is specifically configured to, in a case that the fifth condition is met, execute the first operation according to the information of the first data packet;
the fifth condition includes at least one of the following:
congestion ends;
the actual resource load does not reach the resource load corresponding to the first data packet;
the first category information is not acquired; and
the second category information is acquired.

In an embodiment of this application, the range of the first target data packet is indicated and reflected through the information of the first target data packet; the information of the first target data packet includes at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment, the importance level range of the first target data packet is reflected by the first importance level. The first importance level is configured to indicate at least one of the following: the range of the first target data packet covers the data packets with the importance level lower than or equal to the first importance, and the range of the importance level covers all importance levels lower than or equal to the first importance.

In another embodiment, the importance level range of the first target data packet is reflected by one or more importance levels.

In an embodiment, the importance level range of the first data packet is reflected by the second importance level. The second importance level is configured to indicate at least one of the following: the range of the first data packet covers the data packets with the importance level lower than or equal to the second importance, and the range of the importance level covers all importance levels lower than or equal to the second importance.

In another embodiment, the importance level range of the first data packet is reflected by one or more importance levels.

In an embodiment, the importance level range of the third data packet is reflected by the third importance level. The third importance level is configured to indicate at least one of the following: the range of the third data packet covers the data packets with the importance level higher than or equal to the third importance, and the range of the importance level covers all importance levels higher than or equal to the third importance.

In another embodiment, the importance level range of the third data packet is reflected by one or more importance levels.

In an embodiment of this application, the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
   and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
   and/or
the target priority corresponding to the first target data packet is a discard priority, and is configured to indicate to execute the first target operation according to the information of the first target data packet with different priorities in a priority sequence;
   and/or
the priority corresponding to the first data packet is a discard priority, and is configured to indicate to execute the first target operation according to the information of the first data packet with different priorities in a priority sequence;
   and/or
the priority corresponding to the third data packet is a transfer guaranteeing priority, and is configured to indicate to execute the data transfer guaranteeing operation according to the information of the third data packets with different priorities in a priority sequence;
   and/or
the index of the information of the first target data packet is configured to index the information of the first target data packet;
   and/or
the index of the information of the first data packet is configured to indicate the information of the first data packet;
   and/or
the index of the information of the third data packet is configured to indicate the information of the third data packet.

By means of the embodiments of this application, in a case of network congestion, transfer of the data packets can be stopped according to the information of the data packets and the indication of the network element of the core network, a further processing pressure on the communication devices can be avoided, the resource overhead of the communication devices is reduced, the transfer resource is saved, and the network congestion is alleviated; the communication devices can understand differences of business data through the indication of the network element of the core network, reserve important data and abandon secondary data, and avoid missing of important data.

Referring to FIG. 10, FIG. 10 is a schematic structural diagram of a data processing apparatus provided in the embodiment of this application. The apparatus is applied to the second communication device. As shown in FIG. 10, the data processing apparatus 80 includes:
a second processing module 81, configured to execute a second operation, where the second operation includes at least one of the following:
first information is acquired, where the first information includes at least one of the following: first category information and second category information;
a network resource load is measured;
an importance level of a target data packet, data flow description information corresponding to the target data packet, and/or a tunnel to which the target data packet is mapped are determined;
a range of a first target data packet is determined;
the information of the first data packet with different priorities is applied in a priority sequence to execute the a second first target operation;
the second first target operation is stopped and/or a second second target operation is executed, or, the second first target operation is executed; and
a data transfer guaranteeing operation is executed,
where
the first category information includes at least one of the following:
   a monitored network resource load or an index of a load value corresponding to the network resource load; and
   first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
   information of the first data packet; and
   information of the third data packet,
   where
   the second category information includes at least one of the following:
      the monitored network resource load or an index of a load value corresponding to the network resource load; and
      second indication information, where the second indication information is configured to indicate at least one of the following: congestion ends, the network resource load does not reach the reporting threshold, and data transfer is recovered;
      where the second data packet is a data packet depending on the first data packet;
      the fourth data packet is a data packet on which the third data packet depends;
      the information of the first data packet is configured to indicate the range of the first data packet; and
      the information of the third data packet is configured to indicate the range of the third data packet.

In an embodiment, the second communication device may receive the first information from a third source device, and the third source device includes, but is not limited to, the first communication device RAN.

In an embodiment of this application, the network resource load includes at least one of the following: a resource load of the first communication device, a resource load of a transfer layer connected to the first communication device, and a transmission rate of the transfer layer connected to the first communication device.

In an embodiment of this application, the first target data packet is at least one of the following: a data packet with a low importance level, a data packet that needs to be discarded, a data packet that is allowed to be discarded, a data packet that is not needed to be prioritized for guaranteed transfer, and a data packet on which a data packet that is not needed to be prioritized for guaranteed transfer depends.

In an embodiment of this application, the determining the range of the first target data packet includes at least one of the following:
the information of the first data packet with different priorities is applied step by step from the highest priority to the lowest priority to determine the range of the first target data packet; and
the importance level is used as the range of the first target data packet from the lowest importance level to the highest importance level;
The first target data packet includes at least one of the following: the first data packet, the second data packet, and the data packet with the lowest importance level;
the range of the first target data packet includes at least one of the following: the range of the first data packet, the range of the second data packet, and the range of the data packet with the lowest importance level;
the first target data packet does not include at least one of the following: the third data packet and the fourth data packet;
the range of the first target data packet does not include at least one of the following: the range of the third data packet and the range of the fourth data packet,
where
the second target data packet is a data packet depending on the first target data packet; and
the third data packet is a data packet that needs to be prioritized for guaranteed transfer; and
the fourth data packet is a data packet on which the third data packet depends.

In an embodiment of this application, the second first target operation includes:
whether the target data packet is within the range of the first target data packet is determined;
whether the target data packet is the second target data packet is determined;
at least one of the following is executed for the target data packet that is within the range of the first target data packet and/or is the second target data packet: the target data packet is not transferred, a cache amount of the target data packet is excluded from a buffer status report, and the target data packet in a buffer area is deleted;
the first target data packet is not transferred;
in a case that the first target data packet is not transferred, the second target data packet is transferred;
the first target data packet and/or the second target data packet in the buffer area are deleted;
importance level the information of the data packet is added for other data packets;
the other data packets are transferred;
all data packets are not transferred;
the information of the first data packet with different priorities is applied step by step from the highest priority to the lowest priority and not transferring the target data packet accord with the first data packet information; and
the target data packet is not transferred step by step from the lowest importance level to the highest importance level,
where
the second target data packet is a data packet depending on the first target data packet; and
the other data packets are data packets other than the first target data packet and/or the second target data packet.

In a case that the first communication device is the user plane network element, in an embodiment, the not transferring includes not transferring to at least one of the N9 interface and the RAN. For example, in a case of congestion of an opposite terminal (for example, the RAN network element) and/or congestion of a transfer network. In another embodiment, the not transferring includes not transferring to at least one of the N9 interface, the RAN, and the N6. For example, in a case of congestion of the first communication device.

In a case that the first communication device is the RAN network element, in an embodiment, the not transferring includes not transferring to at least one of the N3 interface and the user plane network element (for example, the UPF). For example, in a case of congestion of an opposite terminal (for example, the user plane network element) and/or congestion of a transfer network. In another embodiment, the not transferring includes not transferring to at least one of the N3 interface, the user plane network element (for example, the UPF), and the terminal. For example, in a case that the first communication device is congested.

In an embodiment of this application, the second second target operation includes:
importance level the information corresponding to the data packet is added for the data packets; and
the second communication device sends the data packets to the target interface or the target side;
where the target side includes at least one of the following: the RAN, the user plane network element, and the terminal;
the target interface includes at least one of the following: the N9 interface, the N6 interface, the N3 interface, and the Uu interface.

In an embodiment, in a case that the first communication device is the user plane network element, the target side or the target interface includes at least one of the following: an N9 interface, an RAN, and an N6.

In an embodiment, in a case that the first communication device is the RAN network element, the target side or the target interface includes at least one of the following: the N3 interface, the user plane network element (for example, the UPF), and the terminal.

In an embodiment of this application, the second processing module 81 is configured to receive the uplink data packet of the first communication device and acquire the first information from the header information of the uplink data packet; and/or
receive the uplink control plane signaling of the first communication device and acquire the first information from the uplink control plane signaling.

In an embodiment of this application, the header information includes at least one of the following: a header of a GTP protocol and a header of a service application layer (for example, an L4S header).

In an embodiment of this application, the second processing module 81 is configured to acquire second monitoring configuration information, one or more related information of the first data packet, one or more related information of the third data packet, and/or a second configuration for not transferring data packets; and
execute the second operation according to the second monitoring configuration information, one or more related information of the first data packet, one or more related information of the third data packet, and/or the second configuration for not transferring data packets;
the second monitoring configuration information includes at least one of the following:
   fifth indication information, configured to indicate to execute at least one of the following twelfth operations: the network resource load is monitored, the first information (for example, the first information sent by the first target side by monitoring the uplink packet) is acquired, the load resource of the resource using load of the first target side and/or the resource load of the transfer layer is monitored, sending the data packets to the first target side is stopped according to the resource load of the first target side and/or the resource load of the transfer layer, sending the data packets to the first target side is stopped according to a requirement of the first target side, the second first target operation is executed according to the second configuration for not transferring data packets, and sending the data packets to the first target side is stopped according to the second configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   a time period during which the twelfth operations are executed.

In an embodiment, the network resource load includes at least one of the following: a resource load of the communication device, a resource load of a transfer layer connected to the communication device, and a transmission rate of the transfer layer connected to the communication device.

In an embodiment, the second communication device may receive the second monitoring configuration information from a third source device, and the third source device includes, but is not limited to, the fourth communication device, a fourth CN network element (for example, the SMF) and the like.

The first target side includes the first communication device (for example, the UFP or the RAN network element).

In an embodiment of this application, the second processing module 81 is configured to execute the second first target operation according to the first category information and/or the second configuration for not transferring data packets.

In an embodiment of this application, the second configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the second data packet is a data packet depending on the first data packet; and
the fourth data packet is a data packet on which the third data packet depends.

The effective condition of the related information of the first data packet, the ineffective condition of the related information of the first data packet, the effective condition of the related information of the third data packet, and the ineffective condition of the related information of the third data packet are described in the embodiment of the first communication device in FIG. 2, which are no longer repeatedly described here.

In an embodiment, the firstdata packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment, in a case that the information of the first data packet only includes the tunnel information corresponding to the first data packet, the information may represent all data packets (for example, cached uplink data packets) of the tunnel to be abandoned to transmit.

In an embodiment, the auxiliary information is sent through a signaling or cell of granularity of the tunnel, representing that the auxiliary information is only applied to the tunnel. For example, the first data is the first data in the tunnel, implicitly defining that the range of the first data is within the tunnel. For example, the fourth indication information indicates to not transmit all the data, which represents not transferring all the data of the tunnel. For example, in combination with the importance level X in the information of the first data packet, it may be reflected that the first data packet is the data packet with the importance level X in the tunnel.

The tunnel includes, but is not limited to, the QoS flow, the radio bearer, the PDU session, and the like.

In an embodiment, in a case that the information of the first data packet only includes the range of the importance level of the first data packet, all the data packet with the importance level may be abandoned to transmit.

In an embodiment of this application, the second processing module 81 is specifically configured to, in a case that a sixth condition is met, execute the second first operation according to the information of the first data packet, or determine that the information of the first data packet is effective;
the sixth condition includes at least one of the following:
the congestion starts;
the first category information is acquired;
an actual resource load reaches the resource load corresponding to the first data packet; and
the index information is acquired, and the index information is configured to indicate the information executing the first data packet corresponding to the index information.

In some embodiments, the congestion starts, which is determined according to at least one of the following: The second communication device is congested, and the transfer layer connected to the second communication device is congested to acquire the first indication information.

In an embodiment of this application, the second processing module 81 is configured to, in a case that a seventh condition is met, execute the second operation according to the information of the first data packet, and/or determine that the information of the first data packet is ineffective;
the seventh condition includes at least one of the following:
congestion ends;
the actual resource load does not reach the resource load corresponding to the first data packet;
the first category information is not acquired; and
the second category information is acquired.

In an embodiment of this application, the range of the first target data packet is indicated and reflected through the information of the first target data packet; the information of the first target data packet includes at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
   and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment, the importance level range of the first target data packet is reflected by the first importance level. The first importance level is configured to indicate at least one of the following: the range of the first target data packet covers the data packets with the importance level lower than or equal to the first importance, and the range of the importance level covers all importance levels lower than or equal to the first importance.

In another embodiment, the importance level range of the first target data packet is reflected by one or more importance levels.

In an embodiment, the importance level range of the first data packet is reflected by the second importance level. The second importance level is configured to indicate at least one of the following: the range of the first data packet covers the data packets with the importance level lower than or equal to the second importance, and the range of the importance level covers all importance levels lower than or equal to the second importance.

In another embodiment, the importance level range of the first data packet is reflected by one or more importance levels.

In an embodiment, the importance level range of the third data packet is reflected by the third importance level. The third importance level is configured to indicate at least one of the following: the range of the third data packet covers the data packets with the importance level higher than or equal to the third importance, and the range of the importance level covers all importance levels higher than or equal to the third importance.

In another embodiment, the importance level range of the third data packet is reflected by one or more importance levels.

In an embodiment of this application, the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
   and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
   and/or
the target priority corresponding to the first target data packet is a discard priority, and is configured to indicate to execute the first target operation according to the information of the first target data packet with different priorities in a priority sequence;
   and/or
the priority corresponding to the first data packet is a discard priority, and is configured to indicate to execute the first target operation according to the information of the first data packet with different priorities in a priority sequence;
   and/or
the priority corresponding to the third data packet is a transfer guaranteeing priority, and is configured to indicate to execute the data transfer guaranteeing operation according to the information of the third data packets with different priorities in a priority sequence;
   and/or
the index of the information of the first target data packet is configured to index the information of the first target data packet;
   and/or
the index of the information of the first data packet is configured to indicate the information of the first data packet;
   and/or
the index of the information of the third data packet is configured to indicate the information of the third data packet.

By means of the embodiments of this application, in a case of network congestion, transfer of the data packets can be stopped according to the information of the data packets and the indication of the network element of the core network, a further processing pressure on the communication devices can be avoided, the resource overhead of the communication devices is reduced, the transfer resource is saved, and the network congestion is alleviated; the communication devices can understand differences of business data through the indication of the network element of the core network, reserve important data and abandon secondary data, and avoid missing of important data.

Referring to FIG. 11, FIG. 11 is a schematic structural diagram of a data processing apparatus provided in the embodiment of this application. The apparatus is applied to the third communication device. As shown in FIG. 11, the data processing apparatus 90 includes:
a third processing module 91, configured to execute a third operation, where the third operation includes at least one of the following:
generating or updating a first policy;
sending the first policy;
the first policy includes at least one of the following: a policy for not transferring data packets, a policy prioritized for guaranteed transfer of the data packets, a policy for monitoring the network resource load, one or more information of the first data packet, one or more information of the third data packets, and tenth indication information,
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: the terminal, the QoS flow, the radio bearer, the data flow, and the data set;
the policy for not transferring data packets includes at least one of the following:
   fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
   one or more related information of the first data packet, and one or more related information of the third data packet,
   where
   the related information of the first data packet includes at least one of the following: the information of the first data packet, the index of the information of the first data packet, an effective condition of the related information of the first data packet, and an ineffective condition of the related information of the first data packet;
   the related information of the third data packet includes at least one of the following: the information of the third data packet, and the index of the information of the third data packet,
   where
   the information of the first data packet is configured to indicate the range of the first data packet;
   the information of the third data packet is configured to indicate the range of the third data packet;
   the second data packet is a data packet depending on the first data packet; and
   the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment, the network resource load is configured to indicate to monitor at least one of the following: a resource load of the communication device, a resource load of a transfer layer connected to the communication device, and a resource load of an opposite communication device.

The related information of the first data packet and the related information of the thirddata packet are described in the embodiment of the first communication device in FIG. 2, which are no longer repeatedly described here.

In an embodiment of this application, the effective condition of the related information of the first data packet includes at least one of the following: the congestion starts, the actual resource load reaches the resource load corresponding to the first data packet, the network resource cannot satisfy a transfer requirement of all data of a first object, and the network cannot guarantee QoS of the first object;
and/or
the ineffective condition of the related information of the first data packet includes at least one of the following: congestion ends, the actual resource load does not reach the resource load corresponding to the first data packet, the network resource satisfies the transfer requirement of all data of the first object, and the network can guarantee QoS of the first object,
where the first object includes at least one of the following: the terminal, the QoS stream, the radio bearer, and the data flow.

In an embodiment of this application, the policy configured to monitor the network resource load includes at least one of the following:
seventh indication information, configured to indicate to execute at least one of the following thirteenth operations: monitoring the network resource load, reporting the first information, acquiring the first information, monitoring the load resource of the first target side and/or the resource load of the transfer layer, stopping sending the data packets to the first target side according to the resource load of the first target side and/or the resource load of the transfer layer, stopping sending the data packets to the first target side according to a requirement of the first target side, executing the first target operation and/or the second first target operation according to the policy for not transferring data packets, and stopping sending the data packets to the first target side according to the policy for not transferring data packets;
network resource load types required to be monitored include at least one of the following: a resource load of the first target side, a resource load of a second target side, a resource load of the transfer layer, a resource load of an RAN network element, and a resource load of a user plane network element; and
one or more reporting thresholds, where the reporting thresholds represent that reporting is needed in a case that the network resource load reaches the thresholds;
a network resource load threshold to which a congestion status is mapped; and
a reporting event, where the reporting event includes at least one of the following: the congestion starts, the congestion ends, and the measured network resource load reaches the reporting threshold;
a measuring frequency of the network resource load; and
a measuring time period of the network resource load; and
a time period during which the thirteenth operations are executed.

In an embodiment, the first target side and the second target side include one of the following: the RAN and the user plane network element. In a case that the first target side is the RAN network element, the second target side may be the user plane network element. In a case that the first target side is the user plane network element, the second target side may be the RAN network element.

In an embodiment, the third communication device may send the first policy to the second target device, and the second target device includes, but is not limited to, the fourth communication device, a fourth CN network element (for example, the SMF) and the like.

In an embodiment of this application, the third processing module 91 is configured to acquire first request information; and execute the third operation according to the first request information,
where
the first request information includes at least one of the following: the data flow description information, the information of the terminal, eighth indication information, one or more related information of the first data packet, one or more related information of the third data packet, and network resource load request information.
the data flow description information, the information of the terminal, eighth indication information, one or more related information of the first data packet, one or more related information of the third data packet, and network resource load request information are specifically described in the fifth communication device in FIG. 6, which are no longer repeatedly described here.

In an embodiment of this application, the information of the first data packet includes at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
and/or
the information of the third data packet includes at least one of the following: the importance level range of the third data packet, the data flow description information of the third data packet, the description information of the data collection of the third data packet, the information of the tunnel corresponding to the third data packet, the direction of the third data packet, the source interface of the third data packet, the resource load corresponding to the third data packet, and the priority corresponding to the third data packet.

In an embodiment of this application, the third processing module 91 is configured to acquire the first category information and generate and/or send the policy for not transferring data packets according to the first category information,
where the first category information includes at least one of the following:
a monitored network resource load or an index of a load value corresponding to the network resource load; and
first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer a second data packet, and it is required not to transfer or allowed not to transfer data packets other than a third data packet and/or a fourth data packet;
information of the first data packet; and
information of the third data packet.

In an embodiment, the first category information is acquired from the first target side.

In an embodiment of this application, the third processing module 91 is configured to acquire the first category information.

In an embodiment, the third communication device may receive the first category information from a fourth source device, and the fourth source device includes, but is not limited to, the first communication device, for example, the RAN.

According to the embodiment of this application, the third communication device can generate the policy for not transferring data packets, the policy prioritized for guaranteed transfer of the data packets, and the policy for monitoring the network resource load according to the information of the data packets, can indicate to stop transmission of the data packets or indicate the data packets to be prioritized for guaranteed transfer, and can indicate other communication devices to execute corresponding operations (for example, stopping transmission of the data packets, abandoning secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

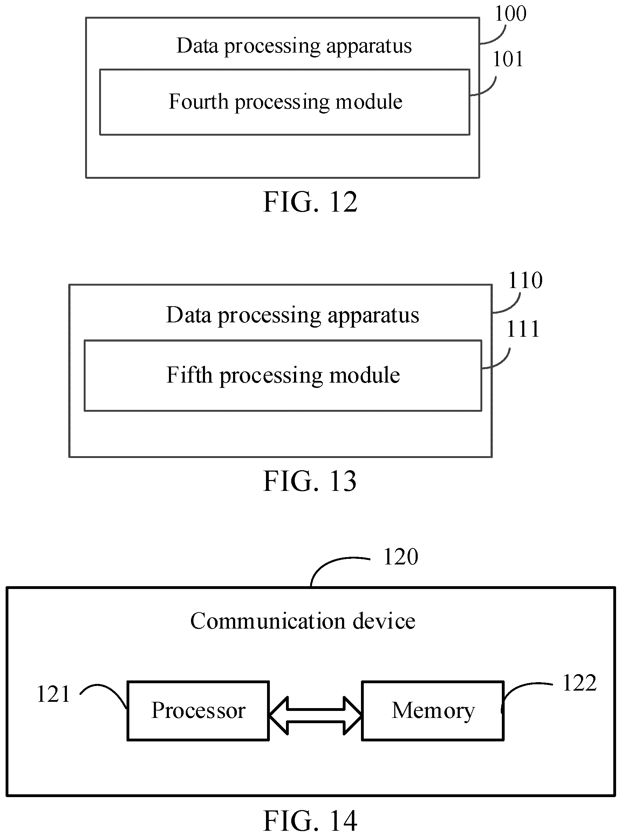

Referring to FIG. 12, FIG. 12 is a schematic structural diagram of a data processing apparatus provided in the embodiment of this application. The apparatus is applied to the fourth communication device. As shown in FIG. 12, the data processing apparatus 100 includes:
a fourth processing module 101, configured to execute a fourth operation, where the fourth operation includes at least one of the following:
generating or updating at least one of the following: a rule for not transferring data packets, generation of the first monitoring configuration information, generation of the second monitoring configuration information, one or more related information of the first data packet, and one or more related information of the third data packet;
sending at least one of the following: the rule for not transferring data packets; the first monitoring configuration information; the second monitoring configuration information, one or more related information of the first data packet, and one or more related information of the third data packet,
where the first monitoring configuration information includes at least one of the following:
   third indication information, configured to indicate to execute at least one of the following monitoring operations: the network resource load is monitored, the first information is sent to a second target side, and the first target operation is executed according to the first configuration for not transferring data packets;
   network resource load types required to be monitored include at least one of the following: a resource load of the first target side, a resource load of a second target side, a resource load of the transfer layer, a resource load of an RAN network element, and a resource load of a user plane network element; and
   one or more reporting thresholds, where the reporting threshold represents that reporting is needed only in a case that the network resource load reaches the reporting threshold;
   a network resource load threshold to which a congestion status is mapped; and
   a reporting event, where the reporting event includes at least one of the following: the congestion starts, the congestion ends, and the measured network resource load reaches the reporting threshold;
   a measuring frequency of the network resource load; and
   a measuring time period of the network resource load,
   where the second monitoring configuration information includes at least one of the following:
      fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring the data packets;
      network resource load types required to be monitored include at least one of the following: a resource load of the first target side, a resource load of a second target side, a resource load of the transfer layer, a resource load of an RAN network element, and a resource load of a user plane network element; and
      a time period during which the twelfth operations are executed.

In an embodiment, the network resource load includes at least one of the following: a resource load of the communication device, a resource load of a transfer layer connected to the communication device, and a transmission rate of the transfer layer connected to the communication device.

The related information of the first data packet and the related information of the third data packet are described in the embodiment of the first communication device in FIG. 2, which are no longer repeatedly described here.

In an embodiment of this application, the first configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the second configuration for not transferring data packets includes at least one of the following:
fourth indication information, where the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
where
the related information of the first data packet includes at least one of the following: the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet,
where
the information of the first data packet is configured to indicate the range of the first data packet;
the information of the third data packet is configured to indicate the range of the third data packet;
the first data packet includes at least one of the following: the data packets needed to be discarded, and the data packets allowed not to transmit;
the second data packet is a data packet depending on the first data packet;
the third data packet is a data packet that needs to be prioritized for guaranteed transfer; and
the fourth data packet is a data packet on which the third data packet depends.

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.

In an embodiment of this application, the fourth processing module 101 is configured to acquire a first policy (self-configured or received); and execute the fourth operation according to the first policy;

the first policy includes at least one of the following: a policy for not transferring data packets, a policy prioritized for guaranteed transfer of the data packets, a policy for monitoring the network resource load, one or more information of the first data packet, one or more information of the third data packets, and tenth indication information,
where
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition includes at least one of the following: the network resource cannot satisfy a transfer requirement of all data of the first object, a network cannot guarantee QoS of the first object, and the network is congested;
the first object includes at least one of the following: a terminal, a QoS stream, a radio bearer, a data flow, and a data set.
a policy for not transferring data packets, a policy prioritized for guaranteed transfer of the data packets, a policy for monitoring the network resource load, the information of the first data packet, and the information of the third data packets are described in the embodiment of the third communication device in FIG. 4, which are no longer repeatedly described here.

In an embodiment, the fourth communication device may receive the first policy from a fifth source device, and the fifth source device includes, but is not limited to, the third communication device, a third CN network element (for example, the PCF) and the like.

In an embodiment, the fourth communication device may receive the first monitoring configuration information from a third target device, and the third target device includes, but is not limited to, the second communication device, a second CN network element (for example, the UPF) and the like.

In an embodiment, the fourth communication device may receive the second monitoring configuration information from the third target device, and the third target device includes, but is not limited to, the second communication device, the second CN network element (for example, the UPF) and the like.

In an embodiment of this application, the fourth processing module 101 is configured to acquire the first category information and generate and/or send the second configuration for not transferring data packets according to the first category information,
where the first category information includes at least one of the following:
a monitored network resource load or an index of a load value corresponding to the network resource load; and
first indication information, where the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet.

In an embodiment of this application, the fourth processing module 101 is configured to acquire the first category information.

In an embodiment, the fourth communication device may send the second monitoring configuration information to a fourth target device, and the fourth target device includes, but is not limited to, the first communication device, for example, the RAN and the like.

According to the embodiment of this application, the fourth communication device can generate the rule for not transferring data packets, the first monitoring configuration information, and the second monitoring configuration information according to the information of the data packets and the indication of the core network, can indicate to stop transmission of the data packets or indicate the data packets to be prioritized for guaranteed transfer, and can indicate other communication devices to execute corresponding operations (for example, stopping transferring the data packets, discarding secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

Referring to FIG. 13, FIG. 13 is a schematic structural diagram of a data processing apparatus provided in the embodiment of this application. The apparatus is applied to the fifth communication device. As shown in FIG. 13, the data processing apparatus 110 includes:
a fifth processing module 111, configured to execute a fifth operation, where the fifth operation includes at least one of the following:
the first request information is sent, including at least one of the following: the data flow description information, the information of the terminal, ninth indication information, the one or more related information of the first data packet, the one or more related information of the third data packet, and network resource load request information,
where
the ninth indication information is configured to indicate: in a case that an eighth condition is met, allowing not to transfer a part of data packets of a second object, allowing not to transfer the first data packet and/or a second data packet, requiring to guarantee the third data packet and/or a fourth data packet preferentially, and allowing not to transfer the data packets other than the third data packet and/or the fourth data packet,
where the eighth condition includes at least one of the following: the network resource cannot satisfy the transmission requirement on all data of the second object, the network cannot guarantee the QoS of the second object, and the network is congested;
the second object includes at least one of the following: the terminal, the data flow, and the data set,
where the second object is configured to map the first object.

For example, the second object is the data flow, and the first object is the QoS flow or the radio bearer and the like.
related information of the first data packet includes at least one of the following:
   the information of the first data packet, the index of the information of the first data packet, an effective condition of the related information of the first data packet, and an ineffective condition of the related information of the first data packet;
the related information of the third data packet includes at least one of the following: the information of the third data packet, and the index of the information of the third data packet;
where
the information of the first data packet is configured to indicate the range of the first data packet;
the information of the third data packet is configured to indicate the range of the third data packet;
the second data packet is a data packet depending on the first data packet; and
the fourth data packet is a data packet on which the third data packet depends;

In an embodiment, the first data packet is at least one of the following: the data packets assigned by the information of the first data packet, the data packets needed to be discarded, and the data packets allowed to be discarded.

In an embodiment, the third data packet is a data packet that needs to be prioritized for guaranteed transfer.
the network resource load request information includes at least one of the following:
tenth indication information, configured to indicate network resource load types required to be monitored;
network resource load types required to be monitored include at least one of the following: a resource load of the first target side, a resource load of a second target side, a resource load of the transfer layer, a resource load of an RAN network element, and a resource load of a user plane network element; and
a measuring frequency of the network resource load; and
a reporting threshold of the network resource load;
a reporting event of the network resource load; and
a reporting period of the network resource load.

In an embodiment of this application, the effective condition of the related information of the first data packet includes at least one of the following: the congestion starts, the actual resource load reaches the resource load corresponding to the first data packet, the network resource cannot satisfy the transmission requirement on all the data of the second object, and the network cannot guarantee the QoS of the second object;
and/or
the effective condition of the related information of the third data packet includes at least one of the following: the congestion starts, the actual resource load reaches the resource load corresponding to the third data packet, the network resource cannot satisfy the transmission requirement on all the data of the second object, and the network cannot guarantee the QoS of the second object;
   and/or
the ineffective condition of the related information of the first data packet includes at least one of the following: congestion ends, the actual resource load does not reach the resource load corresponding to the first data packet, the network resource cannot satisfy the transmission requirement on all the data of the second object, and the network can guarantee QoS of the second object;
   and/or
the ineffective condition of the related information of the third data packet includes at least one of the following: congestion ends, the actual resource load does not reach the resource load corresponding to the third data packet, the network resource cannot satisfy the transmission requirement on all the data of the second object, and the network can guarantee the QoS of the second object.

According to the embodiment of this application, the fifth communication device can send the first request information to the other communication device, so that the other communication devices generate the policy for not transferring data packets, the policy prioritized for guaranteed transfer of the data packets, and the policy for monitoring the network resource load and the like according to the first request information, so as to indicate to stop transmission of the data packets or indicate the data packets to be prioritized for guaranteed transfer, and can indicate other communication devices to execute corresponding operations (for example, stopping transmission of the data packets, abandoning secondary data packets and the like) according to the monitored network resource load, so that a further processing pressure on the communication devices can be avoided, the resource overhead of the communication devices is reduced, the transfer resource is saved, the network congestion is alleviated, and important data is prevented from missing.

The data processing apparatus provided in the embodiment of this application can implement each process implemented by the method embodiments shown in FIG. 2 to FIG. 8 and achieve the same technical effect. To avoid repetition, details are not described herein again.

Optionally, as shown in FIG. 14, the embodiment of this application further provides a communication device 120, including a processor 121 and a memory 122, where the memory 122 stores programs or instructions runnable in the processor 121. For example, when the communication device 120 is a terminal, executed by the processor 121, the programs or instructions implement various steps of the data processing method embodiment and can achieve the same technical effect. In a case that the communication device 120 is a network side device, the programs or instructions, when executed by the processor 121, implement various processes of the embodiment of the data processing method embodiment and can achieve the same technical effect. To avoid repetition, it is not described repeatedly herein.

The embodiment of this application further provides a readable storage medium, storing programs or instructions, where the programs or instructions, when executed by a processor, implement the processes of the foregoing data processing method embodiment and can achieve the same technical effects. To avoid repetition, details are not described herein again.

The processor is the processor in the terminal in the foregoing embodiments. The readable storage medium includes a computer readable storage medium such as a Read Only Memory (ROM), a Random-Access Memory (RAM), a magnetic disk, or an optical disc.

The embodiment of this application further provides a chip, including a processor and a communication interface, where the communication interface is coupled to the processor, and the processor is configured to run programs or instructions to implement various processes of the data processing method embodiment and can achieve the same technical effect. To avoid repetition, details are not described herein again.

It is to be understood that the chip mentioned in this embodiment of this application may also be called a system-level chip, a system chip, a chip system or a system on chip, etc.

The embodiment of this application further provides a computer program/program product, stored in a storage medium. The computer program/program product is executed by at least one processor to implement various processes of the data processing method embodiment and can achieve the same technical effect. To avoid repetition, details are not described herein again.

Persons of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. Persons skilled in the art may use different methods to implement the described functions for each particular application, but such embodiment is not to be considered beyond the scope of the present disclosure.

Persons skilled in the art may clearly understand that for convenience and conciseness of description, for specific working processes of the foregoing systems, apparatuses and units, reference may be made to the corresponding processes in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely a logical function division and may be other division during actual embodiment. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Part or all of the units may be selected to achieve the purpose of the solutions of the embodiments according to a practical requirement.

In addition, functional units in the embodiments of the present disclosure may be integrated into one processing unit, or each of the units may be physically separated, or two or more units may be integrated into one unit.

When being realized in form of software functional unit and sold or used as an independent product, the function may also be stored in a computer-readable storage medium. Based on such an understanding, the technical solutions of this application essentially, or the part contributing to the related technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The aforementioned storage medium includes: various media capable of storing program codes such as a U disk, a mobile hard disk, an ROM, an RAM, a magnetic disk or an optical disk.

A person of ordinary skill in the art may understand that all or part of the processes of the methods in the embodiments may be implemented by a computer program instructing relevant hardware. The program may be stored in a computer-readable storage medium. When the program is executed, the procedures of the foregoing method embodiments are performed. The foregoing storage medium may include a magnetic disc, an optical disc, a read-only memory (ROM), a random access memory (RAM) and the like.

Finally, it should be noted that It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it is to be pointed out that the scopes of the method and apparatus in the embodiments of this application are not limited and functions are executed according to the illustrated or discussed sequence. The functions may also be executed in a basically simultaneous way or in a reverse sequence based on the functions involved. For example, the described method may be executed according to a sequence different from the described sequence, and various steps may further be added, omitted or combined. In addition, features described in some examples may also be combined in other examples.

According to the descriptions in the foregoing embodiments, a person skilled in the art may clearly learn that the method according to the foregoing embodiment may be implemented by relying on software and a commodity hardware platform or by using hardware. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal device (which may be a mobile phone, a computer, a server, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Persons of ordinary skill in the art may make various variations under the teaching of the present disclosure without departing from the spirit of this application and the protection scope of the claims, and such variations shall all fall within the protection scope of this application.

## Claims

1. A data processing method, comprising:
executing, by a first communication device, a first operation, wherein the executing the first operation comprises at least one of the following:
measuring a network resource load;
sending first information, wherein the first information comprises at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation, or, executing the first target operation; and
executing a data transfer guaranteeing operation,
wherein
the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer a second data packet, and it is required not to transfer or allowed not to transfer data packets other than a third data packet and/or a fourth data packet;
information of a first data packet; and
information of the third data packet,
wherein
the second category information comprises at least one of the following:
a monitored network resource load or an index of a load value corresponding to the network resource load; and
second indication information, wherein the second indication information is configured to indicate at least one of the following: the congestion ends, the network resource load does not reach the reporting threshold, and data transfer is recovered,
wherein the second data packet is a data packet depending on the first data packet;
the fourth data packet is a data packet on which the third data packet depends;
the information of the first data packet is configured to indicate a range of the first data packet; and
the information of the third data packet is configured to indicate a range of the third data packet.

2. The method according to claim 1, wherein the network resource load comprises at least one of the following: a resource load of the first communication device, a resource load of a transfer layer connected to the first communication device, and a transmission rate of the transfer layer connected to the first communication device.

3. The method according to claim 1, wherein the executing, by the first communication device, the first operation comprises:
acquiring, by the first communication device, first monitoring configuration information, one or more related information of the first data packet, one or more related information of the third data packet, and/or a first configuration for not transferring data packets;
executing, by the first communication device, the first operation according to the first monitoring configuration information, the one or more related information of the first data packet, the one or more related information of the third data packet, and/or the first configuration for not transferring the data packets,
wherein
the first monitoring configuration information comprises at least one of the following:
third indication information, configured to indicate to execute at least one of the following monitoring operations: monitoring the network resource load, sending the first information to a second target side, and executing the first target operation according to the first configuration for not transferring the data packets;
network resource load types required to be monitored comprise at least one of the following: a resource load of a first target side, a resource load of the second target side, a resource load of a transfer layer, a resource load of an RAN network element, and a resource load of a user plane network element;
one or more reporting thresholds, wherein the reporting threshold represents that reporting is needed only in a case that the network resource load reaches the reporting threshold;
a network resource load threshold to which a congestion status is mapped; and
a reporting event, wherein the reporting event comprises at least one of the following: the congestion starts, the congestion ends, and the measured network resource load reaches the reporting threshold;
a measuring frequency of the network resource load; and
a measuring time period of the network resource load.

4. The method according to claim 1, wherein
the sending, by the first communication device, the first information comprises: sending, by the first communication device, an uplink data packet, wherein header information of the uplink data packet comprises the first information;
and/or
sending, by the first communication device, an uplink control plane signaling, wherein the uplink control plane signaling comprises the first information.

5. The method according to claim 4, wherein the header information comprises at least one of the following: a header of a GTP protocol and a header of a business application layer.

6. The method according to claim 3, wherein the sending the first category information comprises: in a case that a first condition is met, the first category information is sent,
wherein the first condition comprises at least one of the following:
the congestion starts;
an actual resource load reaches a resource load corresponding to the first data packet; and
the actual resource load reaches the reporting threshold in the first monitoring configuration information.

7. The method according to claim 3, wherein the sending the second category information comprises: in a case that a second condition is met, sending the second category information;
the second condition comprises at least one of the following:
the congestion ends;
an actual resource load does not reach a resource load corresponding to the first data packet or is decreased to be less than the resource load corresponding to the first data packet; and
the actual resource load does not reach the reporting threshold in the first monitoring configuration information or is decreased to be less than the reporting threshold in the first monitoring configuration information.

8. The method according to claim 3, wherein the sending the monitored network resource load comprises: in a case that a third condition is met, sending the monitored network resource load or the index of the load value corresponding to the network resource load; and
the third condition comprises at least one of the following:
the congestion starts or the congestion ends;
the network resource load reaches the reporting threshold in the first monitoring configuration information;
a network resource load reporting event occurs; and
a network resource load period arrives.

9. The method according to claim 1, wherein the first target data packet is at least one of the following: a data packet with a low importance level, a data packet that needs to be discarded, a data packet that is allowed to be discarded, a data packet that is not needed to be prioritized for guaranteed transfer, and a data packet on which a data packet that is not needed to be prioritized for guaranteed transfer depends.

10. The method according to claim 1 or 9, wherein the determining the range of the first target data packet comprises at least one of the following:
the information of the first data packet with different priorities is applied step by step from the highest priority to the lowest priority to determine the range of the first target data packet; and
using the importance level as the range of the first target data packet from the lowest importance level to the highest importance level;
the first target data packet comprises at least one of the following: the first data packet, the second data packet, and the data packet with the lowest importance level;
the range of the first target data packet comprises at least one of the following: the range of the first data packet, a range of the second data packet, and a range of the data packet with the lowest importance level;
the first target data packet does not comprise at least one of the following: the third data packet and the fourth data packet;
the range of the first target data packet does not comprise at least one of the following: the range of the third data packet and a range of the fourth data packet,
wherein
a second target data packet is a data packet depending on the first target data packet;
the third data packet is a data packet that needs to be prioritized for guaranteed transfer; and
the fourth data packet is a data packet on which the third data packet depends.

11. The method according to claim 1 or 10, wherein the first target operation comprises:
determining whether the target data packet is within the range of the first target data packet;
determining whether the target data packet is the second target data packet;
executing at least one of the following for the target data packet that is within the range of the first target data packet and/or is the second target data packet: not transferring the target data packet, excluding a cache amount of the target data packet from a buffer status report, and deleting the target data packet in a buffer area;
not transferring the first target data packet;
in a case that the first target data packet is not transferred, not transferring the second target data packet;
deleting the first target data packet and/or the second target data packet in the buffer area;
adding, for other data packets, importance level information of the data packets;
transferring the other data packets;
not transferring all data packets;
applying the information of the first data packet with different priorities step by step from the highest priority to the lowest priority and not transferring the target data packet accord with the first data packet information; and
not transferring the target data packet step by step from the lowest importance level to the highest importance level,
wherein
the second target data packet is a data packet depending on the first target data packet; and
the other data packets are data packets other than the first target data packet and/or the second target data packet.

12. The method according to claim 1, wherein the second target operation comprises:
adding, for a data packet, importance level information corresponding to the data packet; and
sending, by the first communication device, the data packet to a target side or a target interface;
the target side comprises at least one of the following: an RAN, a user plane network element, and a terminal;
the target interface comprises at least one of the following: an N9 interface, an N6 interface, an N3 interface, and a Uu interface.

13. The method according to claim 3, wherein the executing, by the first communication device, the first target operation comprises:
acquiring the first configuration for not transferring data packets, related information of the first data packet, and/or related information of the third data packet; and
executing, by the first communication device, the first target operation according to the first category information for not transferring data packets, the first configuration for not transferring data packets, the related information of the first data packet, and/or the related information of the third data packet.

14. The method according to claim 3 or 13, wherein the first configuration for not transferring data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
the one or more related information of the first data packet, and the one or more related information of the third data packet,
wherein
the related information of the first data packet comprises at least one of the following: the information of the first data packet, an index of the information of the first data packet, an effective condition of the related information of the first data packet, and an ineffective condition of the related information of the first data packet;
the related information of the third data packet comprises at least one of the following: the information of the third data packet, and an index of the information of the third data packet,
wherein
the information of the first data packet is configured to indicate the range of the first data packet;
the information of the third data packet is configured to indicate the range of the third data packet;
the first data packet comprises at least one of the following: the data packets needed to be discarded, and the data packets allowed not to transmit;
the second data packet is a data packet depending on the first data packet;
the third data packet is a data packet that is required to be prioritized for guaranteed transfer; and
the fourth data packet is a data packet on which the third data packet depends.

15. The method according to claim 14, wherein
the effective condition of the related information of the first data packet comprises at least one of the following: the congestion starts, an actual resource load reaches a resource load corresponding to the first data packet, a network resource cannot satisfy a transfer requirement of all data of a first object, and a network cannot guarantee QoS of the first object;
and/or
an effective condition of the related information of the third data packet comprises at least one of the following: the congestion starts, the actual resource load reaches the resource load corresponding to the third data packet, the network resource cannot satisfy the transfer requirement of all data of the first object, and the network cannot guarantee QoS of the first obj ect;
and/or
the ineffective condition of the related information of the first data packet comprises at least one of the following: the congestion ends, the actual resource load does not reach the resource load corresponding to the first data packet, the network resource can satisfy the transfer requirement of all data of the first object, and the network can guarantee QoS of the first object;
and/or
an ineffective condition of the related information of the third data packet comprises at least one of the following: the congestion ends, the actual resource load does not reach the resource load corresponding to the third data packet, the network resource can satisfy the transfer requirement of all data of the first object, and the network can guarantee QoS of the first object,
wherein the first object comprises at least one of the following: a terminal, a QoS stream, a radio bearer, a data flow, and a data set.

16. The method according to claim 1, wherein the data transfer guaranteeing operation comprises at least one of the following:
transferring the data packets with high priority preferentially;
transferring the data packets with high importance levels preferentially;
transferring a third target data packet and/or a fourth target data packet preferentially;
transferring the third target data packet and/or the fourth target data packet with high priority preferentially;
the third target data packet is a data packet that needs to be prioritized for guaranteed transfer; and
the fourth target data packet is a data packet on which the third target data packet depends.

17. The method according to claim 1 or 16, wherein the executing, by the first communication device, the data transfer guaranteeing operation comprises:
acquiring related information of the third data packet;
executing, by the first communication device, the data transfer guaranteeing operation according to the related information of the third data packet,
wherein
the related information of the third data packet comprises at least one of the following: the information of the third data packet, a resource load corresponding to the third data packet, a priority corresponding to the third data packet, and an index of the information of the third data packet.

18. The method according to claim 1, wherein the executing the first operation comprises: in a case that a fourth condition is met, executing the first operation according to the information of the first data packet, or determining that the information of the first data packet is effective;
the fourth condition comprises at least one of the following:
the congestion starts;
the first category information is acquired;
an actual resource load reaches the resource load corresponding to the first data packet; and
an index information is acquired, and the index information is configured to indicate the information executing the first data packet corresponding to the index information.

19. The method according to claim 1 or 11, wherein the stopping executing the first target operation and/or executing the second target operation comprise at least one of the following: in a case that a fifth condition is met, executing the first operation according to the information of the first data packet;
the fifth condition comprises at least one of the following:
the congestion ends;
an actual resource load does not reach a resource load corresponding to the first data packet;
the first category information is not acquired; and
the second category information is acquired.

20. The method according to any one of claims 1 to 19, wherein
the range of the first target data packet is indicated and reflected through the information of the first target data packet; the information of the first target data packet comprises at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet comprises at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet; and/or
the information of the third data packet comprises at least one of the following: an importance level range of the third data packet, data flow description information of the third data packet, description information of a data collection of the third data packet, information of a tunnel corresponding to the third data packet, a direction of the third data packet, a source interface of the third data packet, a resource load corresponding to the third data packet, and a priority corresponding to the third data packet.

21. The method according to claim 20, wherein
the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
and/or
the target priority corresponding to the first target data packet is a discard priority, and is configured to indicate to execute the first target operation according to the information of the first target data packet with different priorities in a priority sequence;
and/or
the priority corresponding to the first data packet is a discard priority, and is configured to indicate to execute the first target operation according to the information of the first data packet with different priorities in a priority sequence;
and/or
the priority corresponding to the third data packet is a transfer guaranteeing priority, and is configured to indicate to execute the data transfer guaranteeing operation according to the information of the third data packets with different priorities in a priority sequence;
and/or
the index of the information of the first target data packet is configured to index the information of the first target data packet;
and/or
the index of the information of the first data packet is configured to indicate the information of the first data packet;
and/or
the index of the information of the third data packet is configured to indicate the information of the third data packet.

22. A data processing method, comprising:
executing, by a second communication device, a second operation, wherein the second operation comprises at least one of the following:
acquiring first information, wherein the first information comprises at least one of the following: first category information and second category information;
measuring a network resource load;
determining an importance level of a target data packet, data flow description information corresponding to the target data packet, and/or a tunnel to which the target data packet is mapped;
determining a range of a first target data packet;
applying information of the first data packet with different priorities in a priority sequence to execute the second first target operation;
stopping the second first target operation and/or executing a second second target operation, or, executing the second first target operation; and
executing a data transfer guaranteeing operation,
wherein
the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet,
wherein
the second category information comprises at least one of the following:
a monitored network resource load or an index of a load value corresponding to the network resource load; and
second indication information, wherein the second indication information is configured to indicate at least one of the following: the congestion ends, the network resource load does not reach the reporting threshold, and data transfer is recovered,
wherein the second data packet is a data packet depending on the first data packet;
the fourth data packet is a data packet on which the third data packet depends;
the information of the first data packet is configured to indicate a range of the first data packet; and
the information of the third data packet is configured to indicate a range of the third data packet.

23. The method according to claim 22, wherein the network resource load comprises at least one of the following: a resource load of the first communication device, a resource load of a transfer layer connected to the first communication device, and a transmission rate of the transfer layer connected to the first communication device.

24. The method according to claim 22, wherein the first target data packet is at least one of the following: a data packet with a low importance level, a data packet that needs to be discarded, a data packet that is allowed to be discarded, a data packet that is not needed to be prioritized for guaranteed transfer, and a data packet on which a data packet that is not needed to be prioritized for guaranteed transfer depends.

25. The method according to claim 22 or 24, wherein the determining the range of the first target data packet comprises at least one of the following:
applying the information of the first data packet with different priorities step by step from the highest priority to the lowest priority to determine the range of the first target data packet; and
using the importance level as the range of the first target data packet from the lowest importance level to the highest importance level;
the first target data packet comprises at least one of the following: the first data packet, the second data packet, and the data packet with the lowest importance level;
the range of the first target data packet comprises at least one of the following: the range of the first data packet, a range of the second data packet, and a range of the data packet with the lowest importance level;
the first target data packet does not comprise at least one of the following: the third data packet and the fourth data packet;
the range of the first target data packet does not comprise at least one of the following: the range of the third data packet and a range of the fourth data packet,
wherein
a second target data packet is a data packet depending on the first target data packet;
the third data packet is a data packet that needs to be prioritized for guaranteed transfer; and
the fourth data packet is a data packet on which the third data packet depends.

26. The method according to claim 22 or 25, wherein the second first target operation comprises:
determining whether the target data packet is within the range of the first target data packet;
determining whether the target data packet is the second target data packet;
executing at least one of the following for the target data packet that is within the range of the first target data packet and/or is the second target data packet: not transferring the target data packet, excluding a cache amount of the target data packet from a buffer status report, and deleting the target data packet in a buffer area;
not transferring the first target data packet;
in a case that the first target data packet is not transferred, not transferring the second target data packet;
deleting the first target data packet and/or the second target data packet in the buffer area;
adding, for other data packets, importance level the information of the data packets;
transferring the other data packets;
not transferring all data packets;
applying the information of the first data packet with different priorities step by step from the highest priority to the lowest priority and not transferring the target data packet accord with the first data packet information; and
not transferring the target data packet from the lowest importance level to the highest importance level,
wherein
the second target data packet is a data packet depending on the first target data packet; and
the other data packets are data packets other than the first target data packet and/or the second target data packet.

27. The method according to claim 22, wherein the second second target operation comprises:
adding, for a data packet, importance level the information corresponding to the data packet; and
sending, by the second communication device, the data packet to a target interface or a target side,
wherein the target side comprises at least one of the following: an RAN, a user plane network element, and a terminal;
the target interface comprises at least one of the following: an N9 interface, an N6 interface, an N3 interface, and a Uu interface.

28. The method according to claim 22, wherein the acquiring, by the second communication device, the first information comprises:
receiving, by the second communication device, an uplink data packet of the first communication device, and acquiring the first information from header information of the uplink data packet; and/or
receiving, by the second communication device, an uplink control plane signaling of the first communication device, and acquiring the first information from the uplink control plane signaling.

29. The method according to claim 28, wherein the header information comprises at least one of the following: a header of a GTP protocol and a header of a business application layer.

30. The method according to claim 22, wherein the executing, by the second communication device, the second first target operation comprises:
acquiring, by the second communication device, second monitoring configuration information, one or more related information of the first data packet, one or more related information of the third data packet, and/or a second configuration for not transferring data packets;
executing, by the second communication device, the second operation according to the second monitoring configuration information, one or more related information of the first data packet, one or more related information of the third data packet, and/or the second configuration for not transferring data packets;
the second monitoring configuration information comprises at least one of the following:
fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of a transfer layer, stopping sending the data packets to the first target side according to a requirement of the first target side, executing the second first target operation according to the second configuration for not transferring data packets, and stopping sending the data packets to the first target side according to the second configuration for not transferring data packets;
network resource load types required to be monitored comprise at least one of the following: a resource load of the first target side, a resource load of a second target side, a resource load of the transfer layer, a resource load of an RAN network element, and a resource load of a user plane network element; and
a time period during which the twelfth operations are executed.

31. The method according to claim 22, wherein the executing, by the second communication device, the second first target operation comprises:
executing, by the second communication device, the second first target operation according to the first category information and/or the second configuration for not transferring data packets.

32. The method according to claim 30 or 31, wherein the second configuration for not transferring data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
wherein
the related information of the first data packet comprises at least one of the following: the information of the first data packet, an index of the information of the first data packet, an effective condition of the related information of the first data packet, and an ineffective condition of the related information of the first data packet;
the related information of the third data packet comprises at least one of the following: the information of the third data packet, and an index of the information of the third data packet,
wherein
the information of the first data packet is configured to indicate a range of the first data packet;
the information of the third data packet is configured to indicate a range of the third data packet;
the second data packet is a data packet depending on the first data packet;
the fourth data packet is a data packet on which the third data packet depends.

33. The method according to claim 22, wherein the executing the second first operation comprises: in a case that a sixth condition is met, executing the second first operation according to the information of the first data packet, or determining that the information of the first data packet is effective;
the sixth condition comprises at least one of the following:
the congestion starts;
the first category information is acquired;
an actual resource load reaches a resource load corresponding to the first data packet; and
an index information is acquired, and the index information is configured to indicate the information executing the first data packet corresponding to the index information.

34. The method according to claim 22, wherein the stopping executing the second first target operation and/or executing the second second target operation comprises: in a case that a seventh condition is met, executing the second operation according to the information of the first data packet, and/or determining that the information of the first data packet ineffective;
the seventh condition comprises at least one of the following:
congestion ends;
an actual resource load does not reach a resource load corresponding to the first data packet;
the first category information is not acquired; and
the second category information is acquired.

35. The method according to nay one of claims 22 to 34, wherein
the range of the first target data packet is indicated and reflected through the information of the first target data packet; the information of the first target data packet comprises at least one of the following: an importance level range of the first target data packet, data flow description information of the first target data packet, description information of a data collection of the first target data packet, information of a tunnel corresponding to the first target data packet, a direction of the first target data packet, a source interface of the first target data packet, a resource load corresponding to the first target data packet, and a priority corresponding to the first target data packet;
and/or
the information of the first data packet comprises at least one of the following: an importance level of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
and/or
the information of the third data packet comprises at least one of the following: an importance level range of the third data packet, data flow description information of the third data packet, description information of a data collection of the third data packet, information of a tunnel corresponding to the third data packet, a direction of the third data packet, a source interface of the third data packet, a resource load corresponding to the third data packet, and a priority corresponding to the third data packet.

36. The method according to claim 35, wherein
the resource load corresponding to the first target data packet is configured to indicate that in a case that the actual resource load reaches the resource load corresponding to the first target data packet, the information of the first target data packet is effective, or to execute the first target operation according to the information of the first target data packet;
and/or
the resource load corresponding to the first data packet is configured to indicate that in a case that the actual resource load reaches the resource load corresponding to the first data packet, the information of the first data packet is effective, or to execute the first target operation according to the information of the first data packet;
and/or
the resource load corresponding to the third data packet is configured to indicate that in a case that the actual resource load reaches the resource load corresponding to the third data packet, the information of the third data packet is effective, or to execute the data transfer guaranteeing operation according to the information of the third data packet;
and/or
the target priority corresponding to the first target data packet is a discard priority, and is configured to indicate to execute the first target operation according to the information of the first target data packet with different priorities in a priority sequence;
and/or
the priority corresponding to the first data packet is a discard priority, and is configured to indicate to execute the first target operation according to the information of the first data packet with different priorities in a priority sequence;
and/or
the priority corresponding to the third data packet is a transfer guaranteeing priority, and is configured to indicate to execute the data transfer guaranteeing operation according to the information of the third data packets with different priorities in a priority sequence;
and/or
the index of the information of the first target data packet is configured to index the information of the first target data packet;
and/or
the index of the information of the first data packet is configured to indicate the information of the first data packet;
and/or
the index of the information of the third data packet is configured to indicate the information of the third data packet.

37. A data processing method, comprising:
executing, by a third communication device, a third operation, wherein the third operation comprises at least one of the following:
generating or updating a first policy;
sending the first policy;
the first policy comprises at least one of the following: a policy for not transferring data packets, a policy for prioritized guaranteed transfer of the data packets, a policy for monitoring the network resource load, one or more information of the first data packet, one or more information of the third data packet, and tenth indication information,
wherein
the tenth indication information is configured to indicate: in a case that a ninth condition is met, allowing not to transfer a part of data packets of a first object, allowing not to transfer the first data packet and/or the second data packet, requiring to guarantee the third data packet and/or the fourth data packet preferentially, and allowing not to transfer the data packets other than the third data packet and/or the fourth data packet;
the ninth condition comprises at least one of the following: the network resource cannot satisfy a transfer requirement of all data of the first object, a network cannot guarantee QoS of the first object, and the network is congested;
the first object comprises at least one of the following: a terminal, a QoS flow, a radio bearer, a data flow, and a data set;
wherein the policy for not transferring data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
wherein
the related information of the first data packet comprises at least one of the following: the information of the first data packet, an index of the information of the first data packet, an effective condition of the related information of the first data packet, and an ineffective condition of the related information of the first data packet;
the related information of the third data packet comprises at least one of the following: the information of the third data packet, and an index of the information of the third data packet,
wherein
the information of the first data packet is configured to indicate a range of the first data packet;
the information of the third data packet is configured to indicate a range of the third data packet;
the second data packet is a data packet depending on the first data packet; and
the fourth data packet is a data packet on which the third data packet depends.

38. The method according to claim 37, wherein the effective condition of the related information of the first data packet comprises at least one of the following: congestion starts, an actual resource load reaches a resource load corresponding to the first data packet, the network resource cannot satisfy a transfer requirement of all data of the first object, and the network cannot guarantee QoS of the first object;
and/or
an ineffective condition of the related information of the first data packet comprises at least one of the following: the congestion ends, the actual resource load does not reach the resource load corresponding to the first data packet, the network resource can satisfy the transfer requirement of all data of the first object, and the network can guarantee QoS of the first object,
wherein the first object comprises at least one of the following: the terminal, the QoS stream, the radio bearer, and the data flow.

39. The method according to claim 37, wherein the policy for monitoring the network resource load comprises at least one of the following:
seventh indication information, configured to indicate to execute at least one of the following thirteenth operations: monitoring the network resource load, reporting first information, acquiring the first information, monitoring a load resource of the first target side and/or a resource load of the transfer layer, stopping sending the data packets to the first target side according to the resource load of the first target side and/or the resource load of the transfer layer, stopping sending the data packets to the first target side according to a requirement of the first target side, executing the first target operation and/or the second first target operation according to the policy for not transferring data packets, and stopping sending the data packets to the first target side according to the policy for not transferring data packets;
network resource load types required to be monitored comprise at least one of the following: the resource load of the first target side, a resource load of a second target side, the resource load of the transfer layer, the resource load of the RAN network element, and a resource load of a user plane network element;
one or more reporting thresholds, wherein the reporting threshold represents that reporting is needed only in a case that the network resource load reaches the thresholds;
a network resource load threshold to which a congestion status is mapped; and
a reporting event, wherein the reporting event comprises at least one of the following: the congestion starts, the congestion ends, and the measured network resource load reaches the reporting threshold;
a measuring frequency of the network resource load; and
a measuring time period of the network resource load; and
a time period during which the thirteenth operations are executed.

40. The method according to claim 37, wherein the executing, by the third communication device, the third operation comprises: acquiring, by the third communication device, first request information; and
executing, by the third communication device, the third operation according to the first request information,
wherein
the first request information comprises at least one of the following: data flow description information, information of the terminal, eighth indication information, one or more related information of the first data packet, one or more related information of the third data packet, and network resource load request information.

41. The method according to claim 37, wherein the information of the first data packet comprises at least one of the following: an importance level range of the first data packet, data flow description information of the first data packet, description information of a data collection of the first data packet, information of a tunnel corresponding to the first data packet, a direction of the first data packet, a source interface of the first data packet, a resource load corresponding to the first data packet, and a priority corresponding to the first data packet;
and/or
the information of the third data packet comprises at least one of the following: an importance level range of the third data packet, data flow description information of the third data packet, description information of a data collection of the third data packet, information of a tunnel corresponding to the third data packet, a direction of the third data packet, a source interface of the third data packet, a resource load corresponding to the third data packet, and a priority corresponding to the third data packet.

42. The method according to claim 37, wherein the executing, by the third communication device, the third operation comprises:
acquiring, by the third communication device, the first category information; and
generating and/or sending, by the third communication device the policy for not transferring data packets according to the first category information,
wherein the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet.

43. The method according to claim 42, wherein after the generating the policy for monitoring the network resource load, the method further comprises: acquiring, by the third communication device, the first category information.

44. A data processing method, comprising:
executing, by a fourth communication device, a fourth operation, wherein the fourth operation comprises at least one of the following:
generating or updating at least one of the following: a rule for not transferring data packets, generation of first monitoring configuration information, generation of second monitoring configuration information, one or more related information of a first data packet, and one or more related information of the third data packet;
sending at least one of the following: the rule for not transferring data packets; the first monitoring configuration information; the second monitoring configuration information, the one or more related information of the first data packet, and the one or more related information of the third data packet,
wherein the first monitoring configuration information comprises at least one of the following:
third indication information, configured to indicate to execute at least one of the following monitoring operations: monitoring a network resource load, sending first information to a second target side, and executing a first target operation according to first configuration for not transferring data packets;
network resource load types required to be monitored comprise at least one of the following: a resource load of a first target side, a resource load of the second target side, a resource load of a transfer layer, a resource load of an RAN network element, and a resource load of a user plane network element;
one or more reporting thresholds, wherein the reporting threshold represent that reporting is needed only in a case that the network resource load reaches the reporting threshold;
a network resource load threshold to which a congestion status is mapped; and
a reporting event, wherein the reporting event comprises at least one of the following: congestion starts, the congestion ends, and a measured network resource load reaches the reporting threshold;
a measuring frequency of the network resource load; and
a measuring time period of the network resource load,
wherein the second monitoring configuration information comprises at least one of the following:
fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring data packets;
network resource load types required to be monitored comprise at least one of the following: the resource load of the first target side, the resource load of the second target side, the resource load of the transfer layer, the resource load of the RAN network element, and the resource load of the user plane network element;
a time period during which the twelfth operations are executed.

45. The method according to claim 44, wherein the first configuration for not transferring data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer a second data packet, and it is allowed not to transfer the data packets other than the third data packet and/or a fourth data packet;
the one or more related information of the first data packet, and the one or more related information of the third data packet,
wherein
the related information of the first data packet comprises at least one of the following: information of the first data packet, an index of the information of the first data packet, an effective condition of the related information of the first data packet, and an ineffective condition of the related information of the first data packet;
the related information of the third data packet comprises at least one of the following: information of the third data packet, and an index of the information of the third data packet,
wherein
the information of the first data packet is configured to indicate a range of the first data packet;
the information of the third data packet is configured to indicate a range of the third data packet;
the first data packet comprises at least one of the following: the data packets needed to be discarded, and the data packets allowed not to transfer;
the second data packet is a data packet depending on the first data packet;
the third data packet is a data packet that needs to be prioritized for guaranteed transfer; and
the fourth data packet is a data packet on which the third data packet depends.

46. The method according to claim 44, wherein the second configuration for not transferring data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer a second data packet, and it is allowed not to transfer the data packets other than the third data packet and/or a fourth data packet;
the one or more related information of the first data packet, and the one or more related information of the third data packet,
wherein
the related information of the first data packet comprises at least one of the following: information of the first data packet, an index of the information of the first data packet, an effective condition of the related information of the first data packet, and an ineffective condition of the related information of the first data packet;
the related information of the third data packet comprises at least one of the following: information of the third data packet, and an index of the information of the third data packet,
wherein
the information of the first data packet is configured to indicate a range of the first data packet;
the information of the third data packet is configured to indicate a range of the third data packet;
the first data packet comprises at least one of the following: the data packets needed to be discarded, and the data packets allowed not to transfer;
the second data packet is a data packet depending on the first data packet;
the third data packet is a data packet that needs to be prioritized for guaranteed transfer; and
the fourth data packet is a data packet on which the third data packet depends.

47. The method according to claim 44, wherein the executing, by the fourth communication device, the fourth operation comprises:
acquiring, by the fourth communication device, a first policy; and
the fourth communication device executes the fourth operation according to the first policy,
wherein the first policy comprises at least one of the following: a policy for not transferring data packets, a policy for prioritized guaranteed transfer of the data packets, a policy for monitoring the network resource load, one or more information of the first data packet, one or more information of the third data packets, and tenth indication information,
wherein
the tenth indication information is configured to indicate: in a case that a ninth condition is met, allowing not to transfer a part of data packets of a first object, allowing not to transfer the first data packet and/or a second data packet, requiring to guarantee the third data packet and/or the fourth data packet preferentially, and allow not to transfer the data packets other than the third data packet and/or a fourth data packet;
the ninth condition comprises at least one of the following: network resource cannot satisfy a transfer requirement of all data of the first object, a network cannot guarantee QoS of the first object, and the network is congested;
the first object comprises at least one of the following: a terminal, a QoS stream, a radio bearer, a data flow, and a data set.

48. The method according to claim 44, wherein the executing, by the fourth communication device, the fourth operation comprises:
acquiring, by the fourth communication device, first category information; and
generating and/or sending, by the fourth communication device, the second configuration for not transferring data packets according to the first category information,
wherein the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to the first communication device, it is required not to transfer or allowed not to transfer the first data packet, it is required not to transfer or allowed not to transfer the second data packet, and it is required not to transfer or allowed not to transfer data packets other than a third data packet and/or a fourth data packet;
information of the first data packet; and
information of the third data packet.

49. The method according to claim 48, wherein after the sending the first monitoring configuration information and/or the second monitoring configuration information, the method further comprises: acquiring, by the fourth communication device, the first category information.

50. A data processing method, comprising:
executing, by a fifth communication device, a fifth operation, wherein the fifth operation comprises at least one of the following:
sending first request information, comprising at least one of the following: data flow description information, information of a terminal, ninth indication information, one or more related information of a first data packet, one or more related information of a third data packet, and network resource load request information,
wherein
the ninth indication information is configured to indicate: in a case that an eighth condition is met, allowing not to transfer a part of data packets of a second object, allowing not to transfer the first data packet and/or a second data packet, requiring to guarantee the third data packet and/or a fourth data packet preferentially, and allowing not to transfer the data packets other than the third data packet and/or the fourth data packet,
wherein the eighth condition comprises at least one of the following: a network resource cannot satisfy a transfer requirement of all data of a second object, a network cannot guarantee QoS of the second object, and the network is congested;
the second object comprises at least one of the following: a terminal, a data flow, and a data set;
the related information of the first data packet comprises at least one of the following: information of the first data packet, an index of the information of the first data packet, an effective condition of the related information of the first data packet, and an ineffective condition of the related information of the first data packet;
the related information of the third data packet comprises at least one of the following: information of the third data packet, and an index of the information of the third data packet,
wherein
the information of the first data packet is configured to indicate a range of the first data packet;
the information of the third data packet is configured to indicate a range of the third data packet;
the second data packet is a data packet depending on the first data packet;
the fourth data packet is a data packet on which the third data packet depends;
the network resource load request information comprises at least one of the following:
tenth indication information, configured to indicate network resource load types required to be monitored;
network resource load types required to be monitored comprise at least one of the following: a resource load of a first target side, a resource load of a second target side, a resource load of a transfer layer, a resource load of an RAN network element, and a resource load of a user plane network element;
a measuring frequency of the network resource load; and
a reporting threshold of the network resource load;
a reporting event of the network resource load; and
a reporting period of the network resource load.

51. The method according to claim 50, wherein
the effective condition of the related information of the first data packet comprises at least one of the following: congestion starts, an actual resource load reaches a resource load corresponding to the first data packet, a network resource cannot satisfy a transfer requirement of all data of the second object, and a network cannot guarantee QoS of the second object;
and/or
the effective condition of the related information of the third data packet comprises at least one of the following: the congestion starts, the actual resource load reaches a resource load corresponding to the third data packet, the network resource cannot satisfy the transfer requirement of all data of the second object, and the network cannot guarantee QoS of the second object;
and/or
the ineffective condition of the related information of the first data packet comprises at least one of the following: the congestion ends, the actual resource load does not reach the resource load corresponding to the first data packet, the network resource cannot satisfy the transfer requirement of all data of the second object, and the network can guarantee QoS of the second object;
and/or
the ineffective condition of the related information of the third data packet comprises at least one of the following: the congestion ends, the actual resource load does not reach the resource load corresponding to the third data packet, the network resource cannot satisfy the transfer requirement of all data of the second object, and the network can guarantee QoS of the second object.

52. A data processing apparatus, comprising:
a first processing module, configured to execute a first operation, wherein the executing the first operation comprises at least one of the following:
measuring a network resource load;
sending first information, wherein the first information comprises at least one of the following: first category information and second category information;
determining an importance level of a target data packet, data flow description information corresponding to the target data packet, and/or a tunnel to which the target data packet is mapped;
determining a range of a first target data packet;
stopping a first target operation and/or executing a second target operation, or, executing the first target operation; and
executing a data transfer guaranteeing operation,
wherein
the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to a first communication device, it is required not to transfer or allowed not to transfer a first data packet, it is required not to transfer or allowed not to transfer a second data packet, and it is required not to transfer or allowed not to transfer data packets other than a third data packet and/or a fourth data packet;
information of the first data packet; and
information of the third data packet,
wherein
the second category information comprises at least one of the following:
a monitored network resource load or the index of the load value corresponding to the network resource load; and
second indication information, wherein the second indication information is configured to indicate at least one of the following: the congestion ends, the network resource load does not reach the reporting threshold, and data transfer is recovered,
wherein the second data packet is a data packet depending on the first data packet;
the fourth data packet is a data packet on which the third data packet depends;
the information of the first data packet is configured to indicate a range of the first data packet; and
the information of the third data packet is configured to indicate a range of the third data packet.

53. A data processing apparatus, comprising:
a second processing module, configured to execute a second operation, wherein the second operation comprises at least one of the following:
acquiring first information, wherein the first information comprises at least one of the following: first category information and second category information;
measuring a network resource load;
determining an importance level of a target data packet, data flow description information corresponding to a target data packet, and/or a tunnel to which the target data packet is mapped;
determining a range of a first target data packet;
applying information of the first data packet with different priorities in a priority sequence to execute the a second first target operation;
stopping a second first target operation and/or executing a second second target operation, or, executing the second first target operation; and
executing a data transfer guaranteeing operation,
wherein
the first category information comprises at least one of the following:
a monitored network resource load or an index of a load value corresponding to the network resource load; and
first indication information, wherein the first indication information is configured to indicate at least one of the following: congestion starts, the network resource load reaches a reporting threshold, it is required to stop transferring data packets to a first communication device, it is required not to transfer or allowed not to transfer a first data packet, it is required not to transfer or allowed not to transfer a second data packet, and it is required not to transfer or allowed not to transfer data packets other than a third data packet and/or a fourth data packet;
information of the first data packet; and
information of the third data packet,
wherein
the second category information comprises at least one of the following:
a monitored network resource load or the index of the load value corresponding to the network resource load; and
second indication information, wherein the second indication information is configured to indicate at least one of the following: the congestion ends, the network resource load does not reach the reporting threshold, and data transfer is recovered,
wherein the second data packet is a data packet depending on the first data packet;
the fourth data packet is a data packet on which the third data packet depends;
information of the first data packet is configured to indicate a range of the first data packet; and
information of the third data packet is configured to indicate a range of the third data packet.

54. A data processing apparatus, comprising:
a third processing module, configured to execute a third operation, wherein the third operation comprises at least one of the following:
generating or updating a first policy;
sending the first policy;
the first policy comprises at least one of the following: a policy for not transferring data packets, a policy for prioritized guaranteed transfer of the data packets, a policy for monitoring the network resource load, one or more information of a first data packet, one or more information of a third data packets, and tenth indication information,
wherein
the tenth indication information is configured to indicate: in a case that a ninth condition is met, allowing not to transfer a part of data packets of a first object, allowing not to transfer the first data packet and/or a second data packet, requiring to guarantee the third data packet and/or a fourth data packet preferentially, and allowing not to transfer data packets other than the third data packet and/or a fourth data packet;
the ninth condition comprises at least one of the following: the network resource cannot satisfy a transfer requirement of all data of the first object, a network cannot guarantee QoS of the first object, and the network is congested;
the first object comprises at least one of the following: a terminal, a QoS flow, a radio bearer, a data flow, and a data set;
wherein the policy for not transferring data packets the data packets comprises at least one of the following:
fourth indication information, wherein the fourth indication information is configured to indicate at least one of the following: it is required to discard or allowed not to transfer all data packets, it is required to discard or allowed not to transfer the first data packet, it is required to discard or allowed not to transfer the second data packet, and it is allowed not to transfer the data packets other than the third data packet and/or the fourth data packet;
one or more related information of the first data packet, and one or more related information of the third data packet,
wherein
the related information of the first data packet comprises at least one of the following: information of the first data packet, an index of the information of the first data packet, an effective condition of the related information of the first data packet, and an ineffective condition of the related information of the first data packet;
the related information of the third data packet comprises at least one of the following: information of the third data packet, and an index of the information of the third data packet,
wherein
the information of the first data packet is configured to indicate a range of the first data packet;
the information of the third data packet is configured to indicate a range of the third data packet;
the second data packet is a data packet depending on the first data packet;
the fourth data packet is a data packet on which the third data packet depends.

55. A data processing apparatus, comprising:
a fourth processing module, configured to execute a fourth operation, wherein the fourth operation comprises at least one of the following:
generating or updating at least one of the following: a rule for not transferring data packets, generation of first monitoring configuration information, generation of second monitoring configuration information, one or more related information of a first data packet, and one or more related information of a third data packet;
sending at least one of the following: the rule for not transferring data packets; the first monitoring configuration information; the second monitoring configuration information, the one or more related information of the first data packet, and the one or more related information of the third data packet,
wherein the first monitoring configuration information comprises at least one of the following:
third indication information, configured to indicate to execute at least one of the following monitoring operations: monitoring a network resource load, sending first information to a second target side, and executing a first target operation according to first configuration for not transferring data packets;
network resource load types required to be monitored comprise at least one of the following: a resource load of a first target side, a resource load of a second target side, a resource load of a transfer layer, a resource load of an RAN network element, and a resource load of a user plane network element;
one or more reporting thresholds, wherein the reporting threshold represent that reporting is needed only in a case that the network resource load reaches the reporting threshold;
a network resource load threshold to which a congestion status is mapped; and
a reporting event, wherein the reporting event comprises at least one of the following: congestion starts, the congestion ends, and a measured network resource load reaches the reporting threshold;
a measuring frequency of the network resource load; and
a measuring time period of the network resource load,
wherein the second monitoring configuration information comprises at least one of the following:
fifth indication information, configured to indicate to execute at least one of the following twelfth operations: monitoring the network resource load, acquiring the first information, monitoring a resource load of the first target side and/or a resource load of the transfer layer, stopping sending the data packets to the first target side according to the resource load of the first target side and/or the resource load of the transfer layer, stopping sending the data packets to the first target side according to a requirement of the first target side, executing the second first target operation according to second configuration for not transferring data packets, and stopping sending the data packets to the first target side according to the second configuration for not transferring data packets;
network resource load types required to be monitored comprise at least one of the following: the resource load of the first target side, the resource load of the second target side, the resource load of the transfer layer, the resource load of the RAN network element, and the resource load of the user plane network element;
a time period during which the twelfth operations are executed.

56. A data processing apparatus, comprising:
a fifth processing module, configured to execute a fifth operation, wherein the fifth operation comprises at least one of the following:
sending first request information, comprising at least one of the following: data flow description information, information of a terminal, ninth indication information, one or more related information of the first data packet, one or more related information of the third data packet, and network resource load request information,
wherein
the ninth indication information is configured to indicate: in a case that an eighth condition is met, allowing not to transfer a part of data packets of a second object, allowing not to transfer the first data packet and/or the second data packet, requiring to guarantee the third data packet and/or the fourth data packet preferentially, and allowing not to transfer the data packets other than the third data packet and/or the fourth data packet,
wherein the eighth condition comprises at least one of the following: the network resource cannot satisfy a transfer requirement of all data of the second object, the network cannot guarantee QoS of a second object, and a network is congested;
the second object comprises at least one of the following: a terminal, a data flow, and a data set;
the related information of the first data packet comprises at least one of the following: information of the first data packet, an index of the information of the first data packet, an effective condition of the related information of the first data packet, and an ineffective condition of the related information of the first data packet;
the related information of the third data packet comprises at least one of the following: information of the third data packet, and an index of the information of the third data packet,
wherein
information of the first data packet is configured to indicate a range of the first data packet;
the information of the third data packet is configured to indicate a range of the third data packet;
the second data packet is a data packet depending on the first data packet;
the fourth data packet is a data packet on which the third data packet depends;
the network resource load request information comprises at least one of the following:
tenth indication information, configured to indicate network resource load types required to be monitored;
network resource load types required to be monitored comprises at least one of the following: a resource load of a first target side, a resource load of a second target side, a resource load of the transfer layer, a resource load of an RAN network element, and a resource load of a user plane network element;
a measuring frequency of the network resource load; and
a reporting threshold of the network resource load;
a reporting event of the network resource load; and
a reporting period of the network resource load.

57. A communication device, comprising a processor and a memory, the memory storing programs or instructions runnable in the processor, wherein when executed by the processor, the programs or instructions implement the steps of the data processing method according to any one of claims 1 to 51.

58. A readable storage medium, having programs or instructions stored thereon, wherein when executed by the processor, the programs or instructions implement the steps of the data processing method according to any one of claims 1 to 51.
